(19) Europäisches Patentamt / European Patent Office / Office européen des brevets

(11) **EP 2 676 872 B1**

(12) **EUROPEAN PATENT SPECIFICATION**

(45) Date of publication and mention
of the grant of the patent:
**07.01.2015 Bulletin 2015/02**

(51) Int Cl.:
*B62J 6/02* *(2006.01)*
*B60Q 1/12* *(2006.01)*
*F21S 8/10* *(2006.01)*
*B60Q 1/18* *(2006.01)*

(21) Application number: **12192580.4**

(22) Date of filing: **14.11.2012**

(54) **Sub-headlight unit, headlight unit, headlight system for vehicles that lean into turns, a vehicle that leans into turns and a method for controlling a sub-headlight unit for vehicles that lean into turns**

Unterscheinwerfereinheit, Scheinwerfereinheit, Scheinwerfersystem für Fahrzeuge, das sich in Kurven legt, Fahrzeug, das sich in Kurven legt und Verfahren zum Steuern einer Unterscheinwerfereinheit für Fahrzeuge, die sich in Kurven legen

Sous-bloc optique, bloc optique, système de bloc optique pour véhicule qui penche dans les virages, véhicule qui penche dans les virages et procédé pour commander le sous-bloc optique pour véhicule qui penche dans les virages

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2012 JP 2012137040**

(43) Date of publication of application:
**25.12.2013 Bulletin 2013/52**

(73) Proprietor: **Yamaha Hatsudoki Kabushiki Kaisha Iwata-shi, Shizuoka 438-8501 (JP)**

(72) Inventors:
• **Ikeda, Takeshi**
**Iwata-shi, Shizuoka 438-8501 (JP)**
• **Kino, Yasuhiko**
**Iwata-shi, Shizuoka 438-8501 (JP)**
• **Inoue, Takehiro**
**Iwata-shi, Shizuoka 438-8501 (JP)**
• **Kosugi, Makoto**
**Iwata-shi, Shizuoka 438-8501 (JP)**

(74) Representative: **Grünecker, Kinkeldey, Stockmair & Schwanhäusser**
**Leopoldstrasse 4**
**80802 München (DE)**

(56) References cited:
**NL-C2- 1 034 984      US-A- 5 426 571**
**US-A1- 2005 270 785   US-A1- 2010 168 958**
**US-A1- 2011 210 666**

EP 2 676 872 B1

**Description**

The present invention relates to a sub-headlight unit **for a vehicle that leans into turns by tilting inward on a curve according to the preamble of independent claim 1,** a headlight unit, and a headlight system for vehicles that lean into turns, to a vehicle that leans into turns, and to a method for controlling sub-headlight unit for a vehicle that leans into turns **tilt inward on a curve according to the preamble of independent claim 12. Such a sub-headlight unit and such a method for controlling a sub-headlight unit can be taken from** US 2010/168958 A1.

Typically, the operator of a vehicle that leans into turns (for example, straddle-type vehicles such as motorcycles, three-wheelers, snowmobiles, and ATVs (all-terrain vehicles)) uses weight shifts to counter the centrifugal force acting on the vehicle when steering into corners and intersections. As a result, the vehicle turns into a curve by tilting (leaning) inward. On the other hand, vehicles that do not lean into turns such as automobiles are steered into corners and intersections by the operator under the centrifugal force acting on the vehicle. The body of a vehicle that does not lean into turns thus tilts outward on a curve under centrifugal force.

Vehicles that lean into turns involve a large tilt, because the operator actively uses weight shifts to make turns. On the other hand, vehicles that do not lean into turns tilt toward the outside of a curve under centrifugal force. The extent of the tilt depends on the traveling speed of the vehicle and the size (radius) of a curve; however, vehicles that do not lean into turns do not actually use the tilt to make turns. The outward tilting of a vehicle that does not lean into turns on a curve under centrifugal force should preferably be small.

In short, whereas vehicles that lean into turns tilt inward on a curve to a relatively greater extent when turning into corners and intersections, vehicles that do not lean into turns involve a relatively smaller tilt directed toward the outside of a curve.

Vehicles, whether leaning or not leaning into turns, are typically equipped with more than one light: those mainly used to provide visibility to the operator of the vehicle, and those that allow the vehicle to be seen by other road users. Headlights are mainly used to provide visibility to the operator of the vehicle, and are typically switchable between a high beam (driving headlight) and a low beam (passing headlight).

High beams provide illumination horizontally (upwardly), and provide distant visibility. High beams are typically used in nighttime when other vehicles are not present ahead, in order to prevent dazzling the operators of the vehicles around. On the other hand, low beams provide light downward, and are also used when other vehicles and road users are present ahead. Vehicles thus typically use low beams for traveling.

The illumination range of the low beam of a vehicle that leans into turns traveling along a straight road is below the horizontal plane including the headlight light source, and spreads forward with a laterally uniform distribution. When entering a left curve, however, the vehicle tilts leftward, and accordingly the illumination range of the headlight light source moves downward to the left. The light thus illuminates a point on the lane more toward the vehicle, and the illumination range becomes smaller inside the curve ahead in the direction of travel.

As a countermeasure, for example, JP-A-2008-222178 proposes a motorcycle in which high beam light sources are turned on with low beam light sources when the lean angle becomes at or above a predetermined value while the low beam light sources are on, so as to illuminate inside of the curve ahead in the direction of travel with the high beam light sources.

In the motorcycle disclosed in this publication, the high beam light sources are turned on in predetermined numbers when the lean angle becomes at or above a predetermined value while the low beam light sources are on.

Further, the foregoing publication discloses that the motorcycle is provided with a single high beam light source, and that the single high beam light source is turned on when the lean angle becomes at or above a predetermined value while the low beam light source is on.

However, the high beam light source is intended to provide illumination forward in front of the vehicle, and as such the light distribution of the high beam light source is typically adjusted to suitably provide illumination forward in front of the vehicle.

Thus, illuminating inside of the curve ahead in the direction of travel with the high beam light source as in the motorcycle described in the foregoing publication inevitably produces unnecessary illumination in the space other than inside of the curve ahead in the direction of travel (for example, the space above the horizontal line, or the space outside of the curve). This is problematic, because it increases power consumption, and the size of the engine, the battery, or the like.

One way to solve this problem is to adjust the light distribution of the high beam light source in a manner allowing the light to illuminate inside of a curve. However, this makes the light distribution of the high beam light source unsuitable for providing illumination forward in front of the vehicle, and the high beam light source providing illumination forward in front of the vehicle might unnecessarily illuminate the space other than the forward and front direction of the vehicle.

The motorcycle disclosed in the foregoing publication includes a plurality of high beam light sources, and predetermined numbers of high beam light sources in the plurality of high beam light sources are turned on when the lean angle becomes at or above a predetermined value while the low beam light sources are on. A problem of this motorcycle, however, is that the size of the heat radiation mechanism necessary for the plurality of high beam light sources as a whole increase, because the on-time of the plurality of high beam light sources becomes long when the high beam light sources are turned on while vehicle is traveling.

As described above, it is difficult with the motorcycle disclosed in the foregoing publication to desirably provide illumination inside of a curve while the low beam and/or the high beam is on. Another problem is that the headlight installation space, and the engine, the battery, or the like increase in size. In this case, the vehicle becomes unsuitable as a vehicle that leans into turns.

It is an object of the present invention to provide a sub-headlight unit, a headlight unit, and a headlight system for vehicles that lean into turns, a vehicle that lean into turns and a method for controlling sub-headlight unit for a vehicle that leans into turns where illumination can be desirably provided inside of a curve regardless of whether the low beam or the high beam is on, while suppressing a size increase.

According to the present invention said object is solved by a sub-headlight unit for a vehicle that leans into turns having the features of independent claim 1.

Preferred embodiments are laid down in the dependent claims.

According to the present invention said object is also solved by a headlight unit and system for a vehicle that leans into turns, and a vehicle that leans into turns having the features of claim 9, 10 or 11.

According to the present invention said object is solved by a method for controlling a sub-headlight unit for a vehicle that leans into turns having the features of independent claim 12.

Preferred embodiments are laid down in the dependent claims.

Accordingly, it is provided a sub-headlight unit for a vehicle that leans into turns, the sub-headlight unit comprising:

> at least one sub headlight light source that provides illumination light forward and outward of the width direction of the vehicle on one side of the width direction of the vehicle,
> a control unit adapted for controlling the sub headlight light source,
> wherein the control unit is adapted to turn on the sub headlight light source when the lean angle of the vehicle leaning to the one side of the width direction of the vehicle reaches a low-beam reference value while a low beam light source of the vehicle is on, and
> the control unit is adapted to turn on the sub headlight light source when the lean angle of the vehicle leaning to the one side of the width direction of the vehicle reaches a high-beam reference value smaller than the low-beam reference value while a high beam light source of the vehicle is on.

Preferably, the sub headlight light source has a cutoff line below the horizontal line of the sub headlight light source upon the lean angle of the vehicle reaching the low-beam reference value, and wherein the sub headlight light source has a cutoff line at least partially above the horizontal line of the sub headlight light source upon the lean angle of the vehicle reaching the high-beam reference value.

Preferably, the angle created by the cutoff line and the horizontal line of the sub headlight light source is smaller when the lean angle of the vehicle is at the low-beam reference value than when the lean angle of the vehicle is at the high-beam reference value.

Preferably, the control unit is adapted to turn off the sub headlight light source in the upright state of the vehicle regardless of whether the low beam light source or the high beam light source is on.

Preferably, a height difference between a center of a maximum illuminance portion of the illumination light from the sub headlight light source and a center of a maximum illuminance portion of the illumination light from the high beam light source is smaller when the lean angle of the vehicle is at the high-beam reference value than when the sub headlight light source is on in the upright state of the vehicle.

Preferably, the sub-headlight unit comprises a plurality of the sub headlight light sources, the low-beam reference value and the high-beam reference value being set for each of the plurality of sub headlight light sources, and the low-beam reference value being different for the plurality of sub headlight light sources, the control unit is adapted to turn on the plurality of sub headlight light sources in order from the sub headlight light sources having the smaller low-beam reference values as the lean angle to the one side of the vehicle increases while the low beam light source is on, and the high-beam reference value of the sub headlight light source that turns on later being equal to or greater than the high-beam reference value of the sub headlight light source that turns on earlier in the turn-on sequence of the plurality of sub headlight light sources while the low beam light source is on.

Preferably, the sub headlight light sources having the larger low-beam reference values have illumination ranges positioned further upward of the vehicle in the upright state of the vehicle.

Preferably, the sub headlight light source that turns on later with increasing lean angles of the vehicle has an illumination range of a predetermined illuminance whose outer edge is more outward relative to the width direction of the vehicle than the outer edge of the illumination range of a predetermined illuminance of the sub headlight light source that turns on earlier when the plurality of sub headlight light sources turns on with increasing lean angles of the vehicle, regardless of whether the low beam light source or the high beam light source is on.

Accordingly, it is also provided a headlight unit for a vehicle that leans into turns, the headlight unit comprising such a sub-headlight unit in a pair, and the low beam light source and the high beam light source,

wherein one of the two sub-headlight units provides illumination light forward and outward of the width direction of the vehicle on the left side of the vehicle, and the other sub-headlight unit provides illumination light forward and outward of the width direction of the vehicle on the right side of the vehicle.

Accordingly, it is also provided a headlight system for a vehicle that leans into turns, the headlight system comprising:

such a headlight unit;
a detection unit that detects a variable used to find the lean angle of the vehicle; and
the control unit is adapted to turn on the sub headlight light source according to the lean angle of the vehicle found by using the result of the detection by the detection unit.

Accordingly, it is also provided a vehicle that leans into turns, wherein the vehicle comprises such a headlight system.

Accordingly, it is also provided a method for controlling sub-headlight unit for a vehicle that leans into turns comprising:

providing illumination light forward and outward of the width direction of the vehicle on one side of the width direction of the vehicle by at least one sub headlight light source,
turning on the sub headlight light source when the lean angle of the vehicle leaning to the one side of the width direction of the vehicle reaches a low-beam reference value while a low beam light source of the vehicle is on, and turning on the sub headlight light source when the lean angle of the vehicle leaning to the one side of the width direction of the vehicle reaches a high-beam reference value smaller than the low-beam reference value while a high beam light source of the vehicle is on.

Preferably, the method for controlling sub-headlight unit further comprises:

setting a cutoff line of the sub headlight light source below the horizontal line of the sub headlight light source upon the lean angle of the vehicle reaching the low-beam reference value,
setting a cutoff line the sub headlight light source at least partially above the horizontal line of the sub headlight light source upon the lean angle of the vehicle reaching the high-beam reference value.

Preferably, the angle created by the cutoff line and the horizontal line of the sub headlight light source is set smaller when the lean angle of the vehicle is at the low-beam reference value than when the lean angle of the vehicle is at the high-beam reference value.

Preferably, the method for controlling sub-headlight unit further comprises:

turning off the sub headlight light source in the upright state of the vehicle regardless of whether the low beam light source or the high beam light source is on.

Preferably, a height difference between a center of a maximum illuminance portion of the illumination light from the sub headlight light source and a center of a maximum illuminance portion of the illumination light from the high beam light source is set smaller when the lean angle of the vehicle is at the high-beam reference value than when the sub headlight light source is on in the upright state of the vehicle.

Preferably, the sub-headlight unit comprises a plurality of the sub headlight light sources, the method is further comprising:

setting the low-beam reference value and the high-beam reference value for each of the plurality of sub headlight light sources, the low-beam reference value being different for the plurality of sub headlight light sources, turning on the plurality of sub headlight light sources in order from the sub headlight light sources having the smaller low-beam reference values as the lean angle to the one side of the vehicle increases while the low beam light source is on, and
setting the high-beam reference value of the sub headlight light source that turns on later equal to or greater than the high-beam reference value of the sub headlight light source that turns on earlier in the turn-on sequence of the plurality of sub headlight light sources while the low beam light source is on.

These and other objects, features, aspects and advantages of the present invention will be apparent to those skilled in the art from the following detailed description, which, taken in conjunction with the accompanying drawings, discloses a preferred embodiment.

[Advantage of the Invention]

The present invention enables illumination to be desirably provided inside of a curve regardless of whether the low beam or the high beam is on, while suppressing a size increase.

[Brief Description of the Drawings]

FIG. 1 is a partially enlarged front view schematically illustrating a motorcycle according to an embodiment.
FIG. 2 is a partially enlarged left side view of the motorcycle illustrated in FIG. 1.
FIG. 3 is a block diagram representing a basic configuration of sub headlight light sources of the motorcycle illustrated in FIG. 1.
FIG. 4A is a diagram representing an example of the relationship between the brightnesses of the sub headlight light sources and the lean angle of the motorcycle while a low beam light source is on. FIG. 4B is a diagram representing an example of the relationship between the brightnesses of the sub headlight light sources and the lean angle of the motorcycle while a high beam light source is on.
FIG. 5 is a diagram schematically representing an example of the screen light distribution of each headlight light source of the motorcycle in the upright state.
FIGS. 6A to 6C represent diagrams schematically illustrating examples of the screen light distribution of each sub headlight light source turning on with increasing lean angles of the motorcycle while the low beam light source is on.
FIGS. 7A to 7C are diagram schematically representing examples of the screen light distribution of each sub headlight light source turning on with increasing lean angles of the motorcycle while the high beam light source is on.
FIG. 8A is a diagram representing another example of the relationship between the brightnesses of the sub headlight light sources and the lean angle of the motorcycle while the low beam light source is on. FIG. 8B is a diagram representing another example of the relationship between the brightnesses of the sub headlight light sources and the lean angle of the motorcycle while the high beam light source is on.

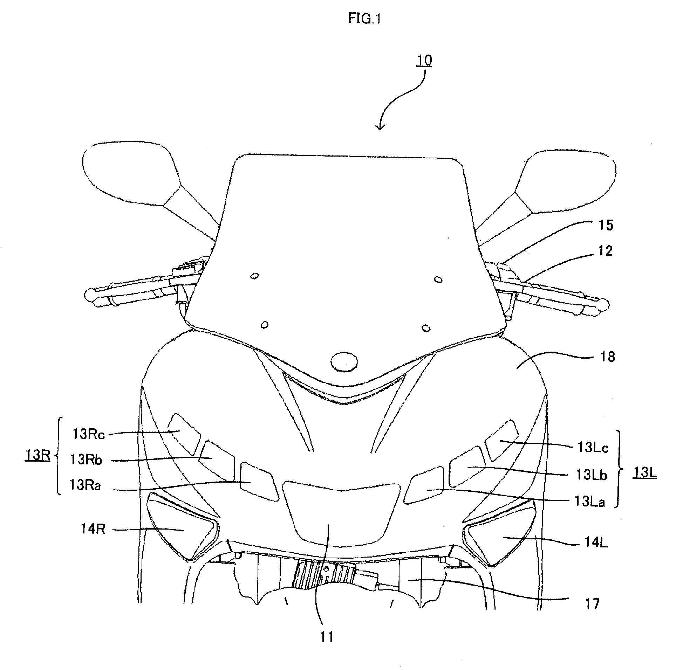

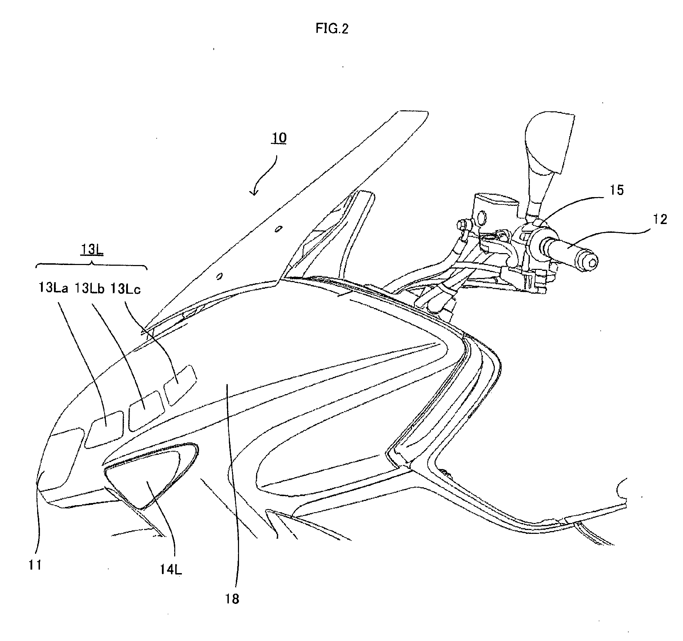

FIG. 1 is a partially enlarged front view schematically illustrating a motorcycle according to an embodiment. FIG. 2 is a partially enlarged left side view of the motorcycle illustrated in FIG. 1.

A motorcycle 10 represents an example of a vehicle that leans into turns of the present teaching. In the present teaching, the vehicle that leans into turns is not particularly limited, and examples include straddle-type vehicles such as motorcycles, three-wheelers, snowmobiles, and ATVs (all-terrain vehicles). In the descriptions below, the terms "longitudinal" and "vertical" are with respect to the traveling direction and the vertical direction, respectively, of the vehicle, and the terms "left" and "right" are with respect to the operator.

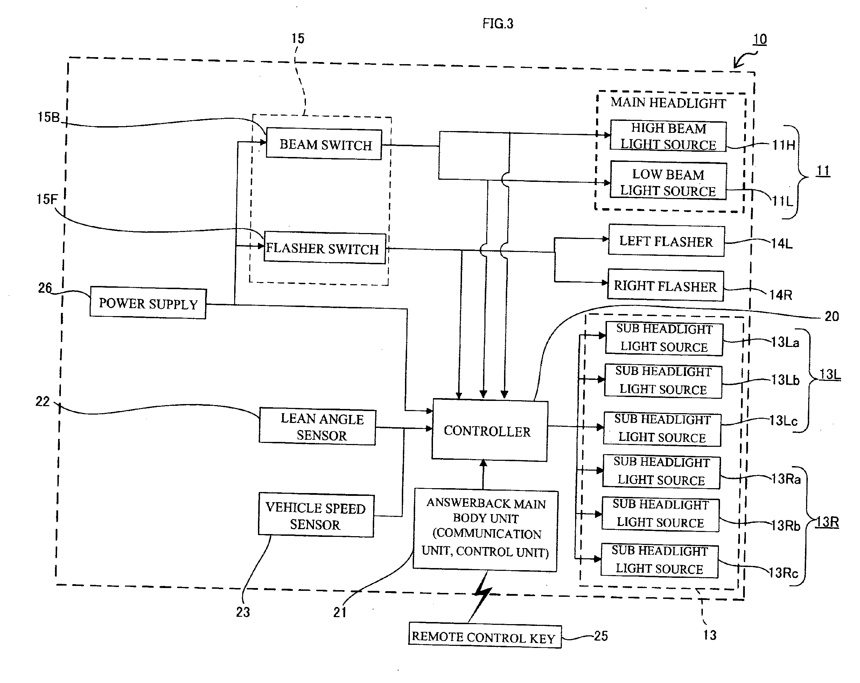

The motorcycle 10 has a handle bar 12. An operation switch 15 is disposed on the handle bar 12 on the left side of the width direction of the vehicle. The operation switch 15 includes a beam switch 15B and a flasher switch 15F (see FIG. 3). A steering shaft (not illustrated) is fixed to the handle bar 12 at the middle portion of the width direction of the vehicle. The steering shaft extends downwardly through a head pipe (not illustrated). Front forks 17 are disposed at the lower end side of the steering shaft. A front wheel (not illustrated) is rotatably supported on the lower end side of the front forks 17. The head pipe is a component of the vehicle frame. In the present teaching, the vehicle frame is not particularly limited, and may be realized by a structure known in the art.

A front cover 18 is disposed in front of the head pipe through which the steering shaft is disposed. The front cover 18 is at the middle portion of the width direction of the motorcycle 10. A main headlight light source 11 is disposed inside the front cover 18. In the present embodiment, the main headlight light source 11 includes a high beam light source 11H (driving headlight) and a low beam light source 11L (passing headlight), though not illustrated in FIG. 1. The high beam light source 11H provides illumination forward horizontally in front of the motorcycle 10, or upwardly from the horizontal direction. The low beam light source 11L of the motorcycle 10 provides forward and downward light below the horizontal direction.

The motorcycle 10 includes a pair of sub-headlight units 13L and 13R of variable light distribution. The sub-headlight units 13L and 13R are disposed on each side of the width direction of the vehicle.

The sub-headlight unit 13L includes a plurality of sub headlight light sources 13La, 13Lb, and 13Lc. The sub headlight light sources 13La, 13Lb, and 13Lc are arranged in order from the middle portion toward the upper left side relative to the width direction of the vehicle.

The sub-headlight unit 13R includes a plurality of sub headlight light sources 13Ra, 13Rb, and 13Rc. The sub headlight light sources 13Ra, 13Rb, and 13Rc are arranged in order from the middle portion toward the upper right side relative to the width direction of the vehicle.

The light axes of the sub headlight light sources 13La to 13Lc, and 13Ra to 13Rc are fixed, and do not move according to lean angle. The reflectors (not illustrated) of the sub headlight light sources are also fixed, and do not move with the lean angle. In the present embodiment, the sub headlight light sources are not particularly limited, and, for example, LEDs may be used. Mono-focusing light sources also may be used as the sub headlight light sources. Further, the arrangement of the sub headlight light sources 13La to 13Lc, and 13Ra to 13Rc in the motorcycle 10 is merely an example of the present teaching, and the present invention is not limited to this example. For example, even though the present embodiment is described through the case where the sub headlight light sources are disposed on the same side (for example, the left side) of the width direction of the vehicle where the sub headlight light sources provide illumination (the left side), the present invention is not limited to this example, and the sub headlight light sources may be disposed on the opposite side (for example, the right side) of the side (the left side) where the sub headlight light sources provide illumination. Further, the sub headlight light sources that provide illumination on the left side, and the sub headlight light source that provide illumination on the right side of the width direction of the vehicle may be disposed by being vertically arranged at the middle portion of the width direction of the vehicle.

The front end of the front cover 18 relative to the longitudinal direction of the vehicle is at the middle of the motorcycle 10. The front cover 18 has a curved surface that is rounded outward and that extends from the middle portion of the width direction of the vehicle on the front side of the vehicle toward the outer sides of the width direction of the vehicle and backward. The sub headlight light sources 13La to 13Lc and 13Ra to 13Rc are disposed along the curved surface of the front cover 18. Flashers 14L and 14R are disposed as direction indicators on each side of the width direction of the motorcycle 10.

FIG. 3 is a block diagram representing a basic configuration of the sub headlight light sources of the motorcycle illustrated in FIG. 1.

The operation switch 15 includes the beam switch 15B and the flasher switch 15F. The beam switch 15B is connected to the high beam light source 11H and the low beam light source 11L of the main headlight light source 11. The ON/OFF of the high beam light source 11H and the low beam light source 11L are switched according to the intended operation of the beam switch 15B by the operator using the beam switch 15B.

The flasher switch 15F is connected to the flashers 14L and 14R. One of the flashers 14L and 14R flashes according to the intended operation of the flasher switch 15F by the operator.

The motorcycle 10 is equipped with a lean angle sensor 22 and a vehicle speed sensor 23. In the present embodiment, the lean angle sensor 22 is a gyroscope that detects the angular velocity around the longitudinal axis of the motorcycle 10, and sends to the controller 20 a signal indicative of the detected angular velocity (roll rate) around the longitudinal axis. The vehicle speed sensor 23 detects the vehicle speed, and sends to the controller 20 a signal indicative of the detected vehicle speed. The controller 20 calculates the lean angle of the motorcycle 10 in motion at each predetermined time point by using the vehicle speed, and the angular velocity around the longitudinal axis.

In the present embodiment, the roll rate is time integrated, and the lean angle is calculated by using the vehicle speed as correction information. However, the lean angle calculation method is not limited to this example. Further, the vehicle speed is not an essential variable in the lean angle calculation. The lean angle may be calculated by using methods known in the art. For example, the lean angle may be calculated by using a steady-state balance equation, using the yaw rate (angular velocity around the vertical axis) and the vehicle speed. Further, the correction information is not limited to vehicle speed. For example, a plurality of gyroscopes and G sensors may be provided, and the values obtained from these sensors, and the vehicle speed may be used as correction information. Further, instead of vehicle speed, GPS positional information and/or geomagnetic information may be used as correction information. The type of sensors (detection units) used for the detection of variables to find the lean angle are not particularly limited, and the sensors may be appropriately disposed according to the variables used for the calculations.

The controller 20 includes a memory (not illustrated).

The stored data in the memory include low-beam reference value KL (°) and high-beam reference value KH (°) for comparison with lean angle. The low-beam reference value corresponds to the lean angle at which the sub headlight light source turns on at a predetermined brightness while the low beam light source 11L is on. The high-beam reference value corresponds to the lean angle at which the sub headlight light source turns on at a predetermined brightness while the high beam light source 11H is on. In the present embodiment, three low-beam reference values, and three high-beam reference values are stored.

The plurality of low-beam reference values $KL_1$, $KL_2$, and $KL_3$ are different ($KL_1 < KL_2 < KL_3$), and are assigned to the sub headlight light sources 13La, 13Lb, and 13Lc, respectively.

The plurality of high-beam reference values $KH_1$, $KH_2$, and $KH_3$ are different ($KH_1 < KH_2 < KH_3$), and are

assigned to the sub headlight light sources 13La, 13Lb, and 13Lc, respectively. However, the present teaching is not limited to this example, and, for example, the sub headlight light source (for example, 13Lb) that turns on later while the low beam light source 11L is on may have a high-beam reference value ($KH_2$) equal to or greater than the high-beam reference value ($KH_1$) of the sub headlight light source (for example, 13La) that turns on earlier in the turn-on sequence of the plurality of sub headlight light sources 13La to 13Lc (13La → 13Lb → 13Lc). Specifically, the high-beam reference values $KH_1$, $KH_2$, and $KH_3$ may satisfy $KH_1 \leq KH_2 \leq KH_3$.

The high-beam reference value $KH_1$ set for one sub headlight light source (for example, 13La) is smaller than the low-beam reference value $KL_1$ set for the same sub headlight light source.

In the present embodiment, the low-beam reference values $KL_1$ to $KL_3$ and the high-beam reference values $KH_1$ to $KH_3$ satisfy the relationships of $KL_n < KL_{n+1}$, $KH_n \leq KH_{n+1}$, and $KH_n < KL_n$, where n represents the order in which the sub headlight light sources turn on while the low beam light source 11L is on.

In the present embodiment, the stored data in the memory include low-beam lower value TL (°) and high-beam lower value TH (°) for comparison with lean angle.

The low-beam lower value TL and the high-beam lower value TH each correspond to the lean angle at which the brightness of the sub headlight light source starts to increase from the off state while the low beam light source 11L or the high beam light source 11H is on. The low-beam lower value TL and the high-beam lower value TH are assigned to each of the sub headlight light sources 13La to 13Lc.

In the present embodiment, the low-beam lower values $TL_1$ to $TL_3$ and the high-beam lower values $TH_1$ to $TH_3$ satisfy the relationships of $TL_n < TL_{n+1}$, $TH_n \leq TH_{n+1}$, and $TH_n < TL_n$. The lower values are smaller than the reference values, satisfying $TL_n < KL_n$, and $TH_n < KH_n$.

In the present embodiment, the stored data in the memory include low-beam upper value UL (°) and high-beam upper value UH (°) for comparison with lean angle.

The low-beam upper value UL and the high-beam upper value UH each correspond to the lean angle at which the sub headlight light source starts to turn on at the maximum brightness as the lean angle increases while the low beam light source 11L or the high beam light source 11H is on. The low-beam upper value UL and the high-beam upper value UH are assigned to each of the sub headlight light sources 13La to 13Lc.

In the present embodiment, the low-beam upper values $UL_1$ to $UL_3$ and the high-beam upper values $UH_1$ to $UH_3$ satisfy the relationships of $UL_n < UL_{n+1}$, $UH_n \leq UH_{n+1}$, and $UH_n < UL_n$. The upper values are larger than the reference values, satisfying $KL_n < UL_n$, and $KH_n < UH_n$.

In the present embodiment, the stored data in the memory include low-beam specific value IL (°) and high-beam specific value IH (°) for comparison with lean angle.

The low-beam specific value IL and the high-beam specific value IH each correspond to the lean angle at which the brightness of the sub headlight light source at the maximum brightness start to decrease as the lean angle increases while the low beam light source 11L or the high beam light source 11H is on. The low-beam specific value IL and the high-beam specific value IH are assigned to each of the sub headlight light sources 13La and 13Lb. The low-beam specific value IL and the high-beam specific value IH are not set for the sub headlight light source 13Lc having the largest reference values TL and TH.

In the present embodiment, the low-beam specific values $IL_1$ and $IL_2$ and the high-beam specific values $IH_1$ and $IH_2$ satisfy the relationships of $IL_n < IL_{n+1}$, $IH_n \leq IH_{n+1}$, and $IH_n < IL_n$. The specific values are larger than the upper values, satisfying $UL_n < IL_n$, and $UH_n < IH_n$.

In the present embodiment, the stored data in the memory include low-beam prescribed value JL (°) and high-beam prescribed value JH (°) for comparison with lean angle.

The low-beam prescribed value JL and the high-beam prescribed value JH each correspond to the lean angle at which the brightness of the sub headlight light source becomes the lowest as the lean angle increases past the specific value IL or LH while the low beam light source 11L or the high beam light source 11H is on. The low-beam prescribed value JL and the high-beam prescribed value JH are assigned to each of the sub headlight light sources 13La and 13Lb. The low-beam prescribed value JL and the high-beam prescribed value JH are not set for the sub headlight light source 13Lc having the largest reference values TL and TH.

In the present embodiment, the low-beam prescribed values $JL_1$ to $JL_3$ and the high-beam prescribed values $JH_1$ to $JH_3$ satisfy the relationships of $JL_n < JL_{n+1}$, $JH_n \leq JH_{n+1}$, and $JH_n < JL_n$. The prescribed values are larger than the specific values, satisfying $IL_n < JL_n$, and $IH_n < JH_n$.

The low-beam variables and the high-beam variables are also each assigned to the sub headlight light sources 13Ra to 13Rc.

In the present embodiment, the low-beam variables and the high-beam variables are stored in the form of table data in the memory.

In response to the operation of the beam switch 15B by the operator, the controller 20 switches the table data it refers to for the brightness control of the sub headlight light sources 13La to 13Lc and 13Ra to 13Rc, according to the entered operation through the beam switch 15B.

The controller 20 is connected to the sub headlight light sources 13La to 13Lc and 13Ra to 13Rc. The controller 20 controls the brightnesses of the sub headlight light sources 13La to 13Lc and 13Ra to 13Rc by using the low-beam table data while the low beam light source 11L is on, and the brightnesses of the sub headlight light sources 13La to 13Lc and 13Ra to 13Rc by using the high-beam table data while the high beam light source 11H is on.

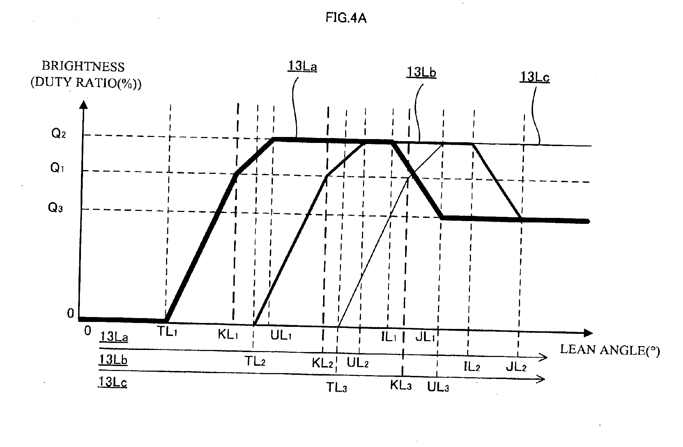

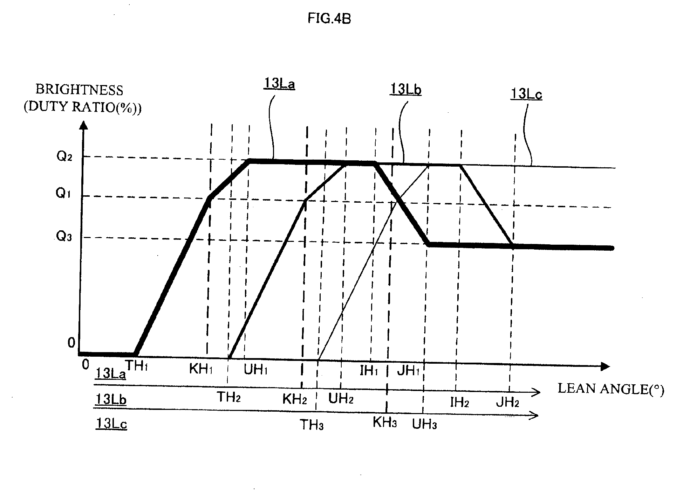

The relationship between each variable and the brightness of the sub headlight light source will be described later with reference to FIGS. 4A and 4B.

A power supply 26 is connected to the high beam light source 11H and the low beam light source 11L via the beam switch 15B. The power supply 26 is connected to the flashers 14L and 14R via the flasher switch 15F. The power supply 26 is also connected to the controller 20. The controller 20 is connected to an answerback main body unit 21. The answerback main body unit 21 receives signal waves from a remote control key 25.

The following describes how the brightness of the sub headlight 13 varies with increasing lean angles, with reference to FIGS. 4A and 4B.

FIG. 4A is a diagram representing an example of the relationship between the brightnesses of the sub headlight light sources and the lean angle of the motorcycle while the low beam light source is on. FIG. 4B is a diagram representing an example of the relationship between the brightnesses of the sub headlight light sources and the lean angle of the motorcycle while the high beam light source is on. The brightnesses $Q_1$ to $Q_3$ of the sub headlight light source satisfy the relationship $Q_3 < Q_1 < Q_2$.

As represented in FIG. 4A, while the low beam light source 11L is on, the brightnesses of the sub headlight light sources 13La to 13Lc vary according to the lean angle in the manner described below.

The sub headlight light sources 13La to 13Lc are off when the lean angle is at or above 0° and below the lower values $TL_1$ to $TL_3$ set for the sub headlight light sources 13La to 13Lc.

The sub headlight light sources 13La to 13Lc turn on at brightnesses darker than brightness $Q_1$ when the lean angle is at or above the lower values $TL_1$ to $TL_3$ and below the reference values $KL_1$ to $KL_3$ set for the sub headlight light sources 13La to 13Lc. Here, the brightnesses of the sub headlight light sources 13La to 13Lc continuously increase with increasing lean angles, and continuously decrease with decreasing lean angles.

The sub headlight light sources 13La to 13Lc turn on at brightness $Q_1$ when the lean angle reaches the reference values $KL_1$ to $KL_3$.

The sub headlight light sources 13La to 13Lc are brighter than brightness $Q_1$ and darker than brightness $Q_2$ when the lean angle is above reference values $KL_1$ to $KL_3$ and below upper values $UL_1$ to $UL_3$. Here, the brightnesses of the sub headlight light sources 13La to 13Lc continuously increase with increasing lean angles, and continuously decrease with decreasing lean angles.

The sub headlight light sources 13La to 13Lc turn on at brightness $Q_2$ when the lean angle reaches the upper values $UL_1$ to $UL_3$.

In the present embodiment, neither a specific value nor a prescribed value is set for the sub headlight light source 13Lc for which the largest reference value is set among the plurality of sub headlight light sources 13La to 13Lc. The sub headlight light source 13Lc with the largest reference value remains on at brightness $Q_2$ even after the lean angle has increased past the low-beam upper value $UL_3$.

On the other hand, the low-beam specific values $IL_1$ and $IL_2$ and the low-beam prescribed values $JL_1$ and $JL_2$ are set for the sub headlight light sources 13La and 13Lb other than the sub headlight light source 13Lc having the largest reference value.

The sub headlight light sources 13La and 13Lb have brightness $Q_2$ while the lean angle is above the low-beam upper values $UL_1$ and $UL_2$ and at or below the low-beam specific values $IL_1$ and $IL_2$.

The sub headlight light sources 13La and 13Lb are darker than brightness $Q_2$ and brighter than brightness $Q_3$ while the lean angle is above the low-beam specific values $IL_1$ and $IL_2$ and below the low-beam prescribed values $JL_1$ and $JL_2$. Here, the brightnesses of the sub headlight light sources 13La and 13Lb continuously decrease with increasing lean angles, and continuously increase with decreasing lean angles.

The sub headlight light sources 13La and 13Lb have brightness $Q_3$ while the lean angle is at or above the low-beam prescribed values $JL_1$ and $JL_2$.

In the manner described above and represented in FIG. 4A, while the low beam light source 11L is on, the sub headlight light sources 13La to 13Lc are turned on in order with increasing lean angles of the motorcycle 10.

The high-beam reference value $KH_n$ is smaller than the low-beam reference value $KL_n$, as mentioned above. Accordingly, as represented in FIG. 4B, the sub headlight light sources 13La to 13Lc remain off while the motorcycle 10 is in the upright state and the high beam light source 11 H is on. As the lean angle increases, the sub headlight light sources 13La to 13Lc turn on at smaller lean angles than when the low beam light source 11L is on.

The brightnesses of the sub headlight light sources 13La to 13Lc vary in the same fashion while the high beam light source 11H is on and while the low beam light source 11L is on, except that the brightnesses vary at different lean angles.

The present embodiment has been described through the case where the specific value and the prescribed value are not set for one of the sub headlight light sources having the largest reference value. However, the present teaching is not limited to this example, and the specific value and the prescribed value may be set for all of the sub headlight light sources.

Further, one or more sub headlight light sources may be assigned with larger reference values (sub headlight light sources assigned with neither specific values nor prescribed values), and one or more sub headlight light sources may be assigned with smaller reference values (sub headlight light sources assigned with specific values and prescribed values).

In FIGS. 4 and 4B, a duty ratio of the voltage sent to the sub headlight light source is used as an index of the brightness of the sub headlight light source. However, the index of the brightness of the sub headlight light source is not limited to this example in the present teaching. For example, an applied voltage, an applied current, an illuminance at a predetermined distance from the light source, or a light source luminance may be used as an index of sub headlight light source brightness, and the relationships between the sub headlight light source brightnesses ($Q_3 < Q_1 < Q_2$) are established irrespective of the index used. The brightnesses $Q_1$, $Q_2$, and $Q_3$ are not particularly limited, and may be appropriately set, as needed.

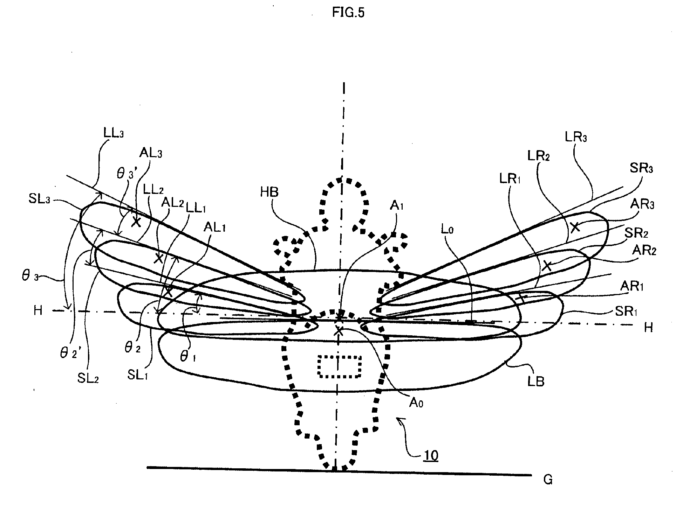

FIG. 5 is a diagram schematically representing an example of the screen light distribution of each headlight light source of the motorcycle in the upright state.

The motorcycle 10 is standing upright with respect to a flat ground G. The low beam light source 11L has an illumination range LB of a predetermined illuminance below the horizontal line H, and spreads sideways in a laterally uniform distribution in the width direction of the vehicle. The light axis $A_0$ of the low beam light source 11 L is below the horizontal line H in the illumination range LB. The cutoff line $L_0$ of the low beam light source 11L is at the upper edge of the illumination range LB, and spreads horizontally along the width direction of the vehicle above the light axis $A_0$ and below the horizontal line H. The illumination range LB of the low beam light source 11L covers both the left side and the right side relative to the width direction of the vehicle.

The high beam light source 11H has an illumination range HB of a predetermined illuminance above the illumination range LB of a predetermined illuminance of the low beam light source 11L. The illumination range HB partially covers the space above the horizontal line H. The light axis $A_1$ of the high beam light source 11H is above the horizontal line H inside the illumination range HB.

The sub headlight light sources 13La, 13Lb, and 13Lc have mutually overlapping illumination ranges $SL_1$, $SL_2$, and $SL_3$ arranged in order from the middle portion toward the upper left side relative to the width direction of the vehicle. Specifically, the illumination ranges $SL_1$, $SL_2$, and $SL_3$ of the sub headlight light sources 13La, 13Lb, and 13Lc are further upward as the low-beam reference values $KL_1$, $KL_2$, and $KL_3$ become larger.

The light axes $AL_1$ to $AL_3$ of the sub headlight light sources 13La to 13Lc are inside of the illumination ranges $SL_1$, $SL_2$, and $SL_3$, and are directed outward of the width direction of the vehicle in this order. The light axes $AL_1$ to $AL_3$ of the sub headlight light sources 13La to 13Lc are above the light axis $A_0$ of the low beam light source 11 L.

The cutoff lines $LL_1$ to $LL_3$ of the sub headlight light sources 13La to 13Lc are confined as a whole within the space above the horizontal line H.

The tilt angles $\theta_1$ to $\theta_3$ of the cutoff lines $LL_1$ to $LL_3$ of the sub headlight light sources 13La to 13Lc are greater in this order.

The tilt angles $\theta_1$ to $\theta_3$ of the cutoff lines $LL_1$ to $LL_3$ of the sub headlight light sources 13La to 13Lc are spaced apart from each other from 0° to $\theta_1$, $\theta_2$, and $\theta_3$, in this order. The interval between 0° and $\theta_1$ is $\theta_1$. The intervals $\theta_1$, $\theta_2$', and $\theta_3$' satisfy the relationship $\theta_1 > \theta_2' > \theta_3'$, where $\theta_2'$ is the interval between $\theta_2$ and $\theta_1$, and $\theta_3'$ is the interval between $\theta_3$ and $\theta_2$. In the present teaching, the intervals $\theta_1$, $\theta_2'$, and $\theta_3'$ are not limited to this example, and may be regular intervals, specifically $\theta_1 = \theta_2' = \theta_3'$.

Note that explanations for the sub headlight light sources 13Ra to 13Rc will be omitted, because the sub headlight light sources 13Ra to 13Rc are identical to the sub headlight light sources 13La to 13Lc, except that these are mirror images of each other.

In the present teaching, the light axis is the straight line that passes the light source and the center of the maximum illuminance portion of the illumination light. The center of the maximum illuminance portion of the illumination light can be specified by providing illumination from the light source onto a screen disposed in front of the light source. This screen illuminance test can be performed according to the method specified by JIS D1619. The cutoff line and the illumination range of a predetermined illuminance also can be specified from the results of the screen illuminance test (for example, from an iso-illuminance distribution chart). Further, the cutoff line and the illumination range of a predetermined illuminance in planar view can be specified from a road surface light distribution converted from the result of the screen illuminance test. The conversion into a road surface light distribution can be performed by using a method known in the art. Specifically, a screen illuminance value may be converted into a road surface illuminance value by common plotting and geometric calculations. In this case, the following equation (I) may be used.

$$\text{Road surface illuminance (Lx)} = \text{screen illuminance (Lx)} \times [(\text{distance between D}$$

$$\text{and F (m))/(distance between D and E (m))}]^2 \qquad \text{(I),}$$

where D is the light source, E is a point on the road surface, and F is the intersection between a screen disposed between D and E and the line connecting D to E.

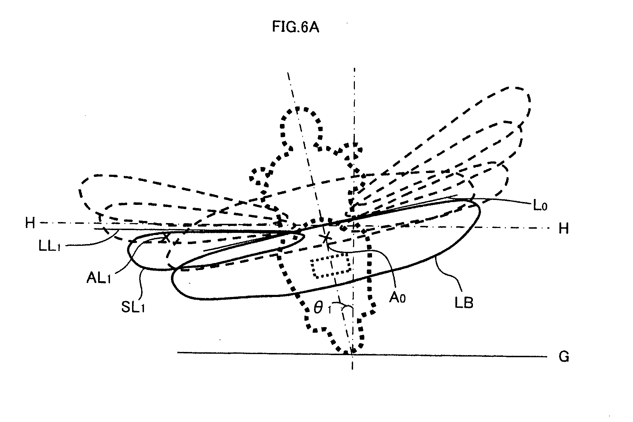

The following describes the screen light distributions of the sub headlight light sources turning on with increasing lean angles to the left of the motorcycle 10, with reference to FIG. 6A to FIG. 7C. In the present embodiment, the low-beam reference values $KL_1$, $KL_2$, and $KL_3$ are lean angles $\theta_1$, $\theta_2$, and $\theta_3$, respectively. The sub headlight light sources 13Ra to 13Rc that provide illumination on the opposite side of the lean direction of the motorcycle 10 are off.

FIGS. 6A to 6C represent diagrams schematically illustrating examples of the screen light distribution of each sub headlight light source turning on with increasing lean angles of the motorcycle while the low beam light source is on.

FIG. 6A represents screen light distributions upon the lean angle reaching the low-beam reference value $KL_1$ ($\theta_1$).

Here, the low beam light source 11L and the sub headlight light source 13La are on, and the sub headlight light sources 13Lb and 13Lc are off. The cutoff line $LL_1$ of the sub headlight light source 13La is below the horizontal line H, and parallel to the horizontal line H. The angle created by the cutoff line $LL_1$ and the horizontal line H is 0°. The light axis $A_0$ and the light axis $AL_1$ are at the same level. Specifically, the height difference between the light axis $A_0$ and the light axis $AL_1$ is smaller than when the motorcycle is in the upright state (FIG. 5). As used herein, "same light axis level" also means "substantially the same light axis level".

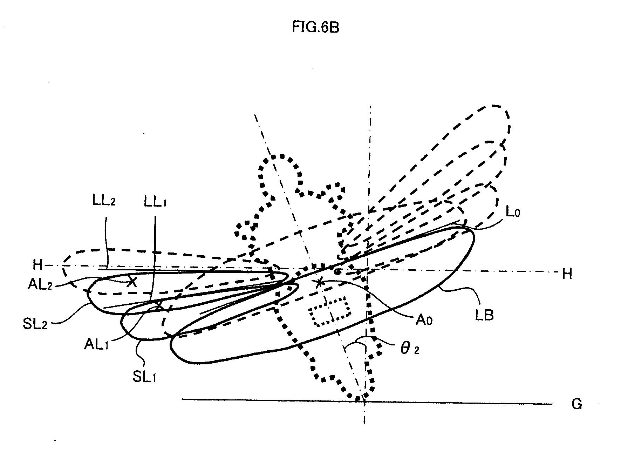

FIG. 6B represents screen light distributions upon the lean angle reaching the low-beam reference value $KL_2$ ($\theta_2$).

Here, the low beam light source 11L, and the sub headlight light sources 13La and 13Lb are on, and the sub headlight light source 13Lc is off. The cutoff line $LL_2$ of the sub headlight light source 13Lb is below the horizontal line H, and parallel to the horizontal line H. The angle created by the cutoff line $LL_2$ and the horizontal line H is 0°. The light axis $A_0$ and the light axis $AL_2$ are at the same level. Specifically, the height difference between the light axis $A_0$ and the light axis $AL_2$ is smaller than when the motorcycle is in the upright state (FIG. 5).

The outer edge of the illumination range $SL_2$ of the sub headlight light source 13Lb that turns on later is more outward (leftward of the width direction of the vehicle) than the outer edge of the illumination range $SL_1$ of the sub headlight light source 13La that turns on earlier.

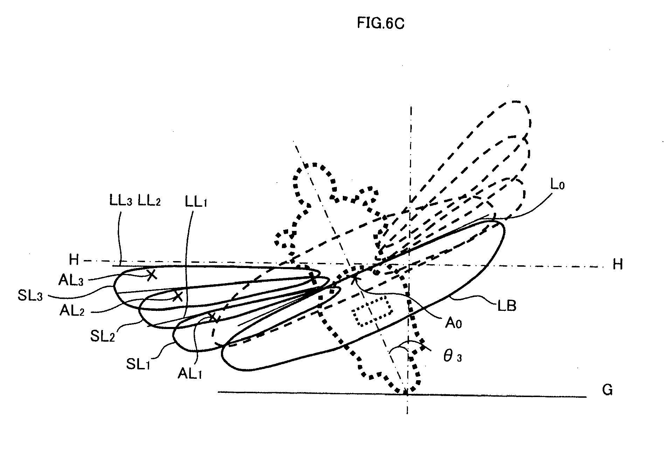

FIG. 6C represents screen light distributions upon the lean angle reaching the low-beam reference value $KL_3$ ($\theta_3$).

Here, the low beam light source 11L, and the sub headlight light sources 13La, 13Lb, and 13Lc are on. The cutoff line $LL_3$ of the sub headlight light source 13Lc is below the horizontal line H, and parallel to the horizontal line H. The angle created between the cutoff line $LL_3$ and the horizontal line H is 0°. The light axis $A_0$ and the light axis $AL_3$ are at the same level. Specifically, the height difference between the light axis $A_0$ and the light axis $AL_3$ is smaller than when the motorcycle is in the upright state (FIG. 5).

The outer edge of the illumination range $SL_3$ of the sub headlight light source 13Lc that turns on later is more outward (leftward of the width direction of the vehicle) than the outer edges of the illumination ranges $SL_1$ and $SL_2$ of the sub headlight light sources 13La and 13Lb that turn on earlier.

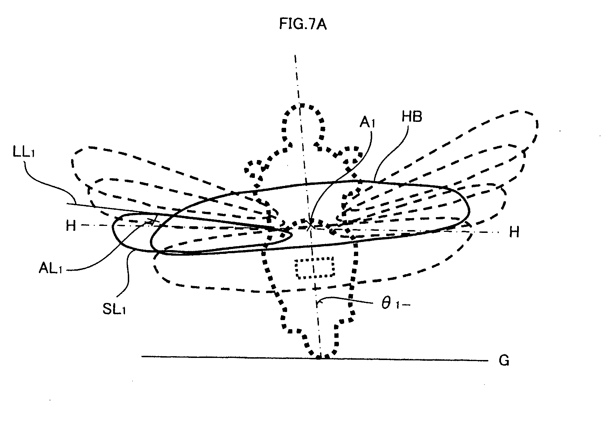

FIGS. 7A to 7C are diagrams schematically representing examples of the screen light distribution of each sub headlight light source turning on with increasing lean angles of the motorcycle while the high beam light source is on.

FIG. 7A represents screen light distributions upon the lean angle reaching the high-beam reference value $KH_1$ ($\theta_{1-}$) ($KH_1 < KL_1$, $\theta_{1-} < \theta_1$).

Here, the high beam light source 11H and the sub headlight light source 13La are on, and the sub headlight light sources 13Lb and 13Lc are off.

The cutoff line $LL_1$ of the sub headlight light source 13La is above the horizontal line H. The cutoff line $LL_1$ tilts upward away from the vehicle relative to the width direction of the vehicle.

The light axis $A_0$ and the light axis $AL_1$ are at the same level. Specifically, the height difference between the light axis $A_0$ and the light axis $AL_1$ is smaller than when the motorcycle is in the upright state (FIG. 5).

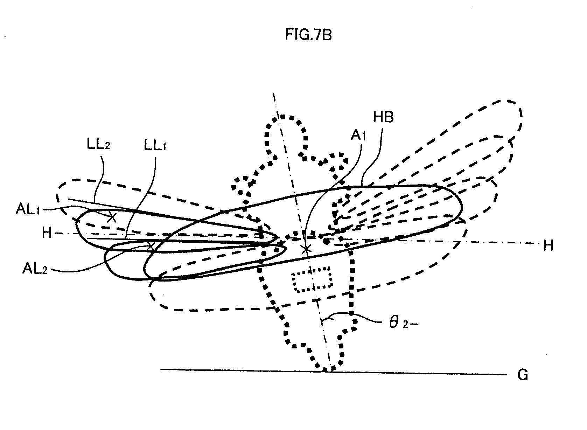

FIG. 7B represents screen light distributions upon the lean angle reaching the high-beam reference value $KH_2$ ($\theta_{2-}$) ($KH_2 < KL_2$, $\theta_{2-} < \theta_2$).

Here, the high beam light source 11H, and the sub headlight light sources 13La and 13Lb are on, and the sub headlight light source 13Lc is off.

The cutoff line $LL_2$ of the sub headlight light source 13Lb is above the horizontal line H. The cutoff line $LL_2$ tilts upward away from the vehicle relative to the width direction of the vehicle.

The light axis $A_0$ and the light axis $AL_2$ are at the same level. Specifically, the height difference between the light axis $A_0$ and the light axis $AL_2$ is smaller than when the motorcycle is in the upright state (FIG. 5).

The outer edge of the illumination range $SL_2$ of the sub headlight light source 13Lb that turns on later is more outward (leftward of the width direction of the vehicle) than the outer edge of the illumination range $SL_1$ of the sub

headlight light source 13La that turns on earlier.

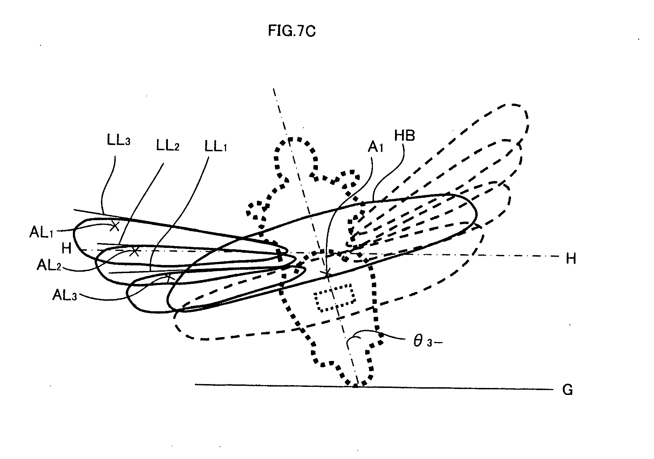

FIG. 7C represents screen light distributions upon the lean angle reaching the high-beam reference value $KH_3$ ($\theta_{3-}$) ($KH_3 < KL_3$, $\theta_{3-} < \theta_3$).

Here, the high beam light source 11H, and the sub headlight light sources 13La, 13Lb, and 13Lc are on.

The cutoff line $LL_3$ of the sub headlight light source 13Lc is above the horizontal line H. The cutoff line $LL_3$ tilts upward away from the vehicle relative to the width direction of the vehicle.

The light axis $A_0$ and the light axis $AL_3$ are at the same level. Specifically, the height difference between the light axis $A_0$ and the light axis $AL_3$ is smaller than when the motorcycle is in the upright state (FIG. 5).

The outer edge of the illumination range $SL_3$ of the sub headlight light source 13Lc that turns on later is more outward (leftward of the width direction of the vehicle) than the outer edges of the illumination ranges $SL_1$ and $SL_2$ of the sub headlight light sources 13La and 13Lb that turn on earlier.

As described above, the sub-headlight unit 13L of the present embodiment includes the sub headlight light sources 13La to 13Lc, separately provided from the low beam light source 11L and the high beam light source 11H, and the sub headlight light sources 13La to 13Lc turn on according to lean angle. This makes it possible to suitably adjust the sub headlight light sources 13La to 13Lc and the high beam light source 11H to have light distributions that are more in conformity with the intended roles of these light sources, and to reduce illumination in unnecessary spaces.

Further, the sub headlight light sources 13La to 13Lc, separately provided from the low beam light source 11L and the high beam light source 11H, turn on according to the lean angle of the motorcycle 10, and accordingly have a shorter on-time than the low beam light source 11L and the high beam light source 11H. This makes it possible to reduce the size of the heat radiation mechanism, and to limit the size of the headlight installation space. Further, because the sub headlight light sources 13La to 13Lc are used while the low beam light source 11L and/or the high beam light source 11H are on, it is possible to limit the number of sub headlight light sources, and to suppress size increase.

Further, because the high-beam reference value $KH_n$ is smaller than the low-beam reference value $KL_n$, the sub headlight light sources 13La to 13Lc can provide more distant illumination when the lean angle reaches the high-beam reference value $KH_n$ than when the lean angle reaches the low-beam reference value $KL_n$. This makes it possible to make the illumination range of the sub headlight light source suitable for the high-beam illumination while also providing a suitable sub headlight light source illumination range for the low-beam illumination, without separately providing a sub headlight light source for use while the low beam light source 11L is on, and a sub headlight light source for use while the high beam light source 11H is on.

The sub-headlight unit 13L can thus desirably illuminate inside of a curve, regardless of whether the low beam light source 11L or the high beam light source 11H is on, while suppressing a size increase.

With the sub-headlight unit 13L, the cutoff lines $LL_1$ to $LL_3$ of the sub headlight light sources 13La to 13Lc are below the horizontal line H when the lean angle of the motorcycle 10 is at the low-beam reference value $KL_n$, and are at least partially above the horizontal line H when the lean angle of the motorcycle 10 is at the high-beam reference value $KH_n$.

In this way, the sub headlight light sources 13La to 13Lc can suppress glare to other road users while the low beam light source 11L is on, and provide distant illumination while the high beam light source 11H is on.

As represented in FIGS. 6A to 6C, with the sub-headlight unit 13L, the cutoff lines $LL_1$, $LL_2$, and $LL_3$ of the sub headlight light sources 13La, 13Lb, and 13Lc are horizontal while the low beam light source 11L is on. On the other hand, as illustrated in FIGS. 7A to 7C, the cutoff lines $LL_1$, $LL_2$, and $LL_3$ of the sub headlight light sources 13La, 13Lb, and 13Lc tilt while the high beam light source 11H is on. Thus, in the present embodiment, the angle created by the cutoff lines $LL_1$, $LL_2$, and $LL_3$ and the horizontal line H while the sub headlight light sources 13La, 13Lb, and 13Lc are on is smaller while the low beam light source 11L is on (0°) than while the high beam light source 11H is on.

In this way, the sub headlight light sources 13La to 13Lc and 13Ra to 13Rc can suppress glare to other road users while the low beam light source 11L is on, and provide distant illumination while the high beam light source 11H is on.

With the sub-headlight unit 13L, the sub headlight light sources 13La to 13Lc remain off while the motorcycle 10 is in the upright state, regardless of whether the low beam light source 11L or the high beam light source 11H is on. In this way, the on-time of the sub headlight light sources 13La to 13Lc can be reduced, despite that the sub headlight light sources 13La to 13Lc turn on according to lean angle.

With the sub-headlight unit 13L, the height differences between the light axes $AL_1$ to $AL_3$ of the sub headlight light sources 13La to 13Lc and the light axis $A_1$ of the high beam light source 11H are smaller (see FIGS. 7A to 7C) when the lean angle of the motorcycle 10 is at the high-beam reference value $KH_n$ than when the sub headlight light sources 13La to 13Lc are turned on in the upright state of the motorcycle 10 (see FIG. 5). This makes it possible to effectively provide distant illumination, while suppressing the light from unnecessarily illuminating the space above the horizontal line H while the high beam light source 11H is on.

With the sub-headlight unit 13L, the low-beam reference values satisfy $KL_n < KL_{n+1}$, and that the high-beam reference values satisfy $KH_n \leq KH_{n+1}$. In this way, the illumination ranges $SL_1$ to $SL_3$ of the sub headlight light sources 13La to 13Lc do not appear much different to the operator while the low beam light source 11L is on and while the high beam light source 11H is on, and appear more natural to the operator.

With the sub-headlight unit 13L, the positions of the illumination ranges $SL_1$ to $SL_3$ of the sub headlight light sources 13La to 13Lc are further upward as the low-beam reference values $KL_1$ to $KL_3$ of the sub headlight light sources 13La to 13Lc become larger in the upright state of the motorcycle 10. In this way, the height differences of the illumination ranges $SL_1$ to $SL_3$ of the sub headlight light sources 13La to 13Lc can be made smaller while the low beam light source 11L and/or the high beam light source 11H are on.

With the sub-headlight unit 13L, the outer edge of the illumination range of a predetermined illuminance of the sub headlight light source that turns on later is more outward (relative to the width direction of the vehicle) than the outer edge of the illumination range of a predetermined illuminance of the sub headlight light source that turns on earlier in the plurality of sub headlight light sources 13La to 13Lc that turn on with increasing lean angles of the motorcycle 10, regardless of whether the low beam light source 11L or the high beam light source 11H is on (see FIGS. 6B and 6C, and FIGS. 7B and 7C). It is therefore possible to appropriately illuminate the target view of the operator passing a curve, regardless of whether the low beam light source 11L or the high beam light source 11H is on.

The present embodiment has been described through the case where the lower value, the reference value, the upper value, the specific value, and the prescribed value are set as the low-beam and high-beam variables respectively for the sub headlight light sources 13La to 13Lc. However, the present teaching is not limited to this example, provided that at least the reference values are set.

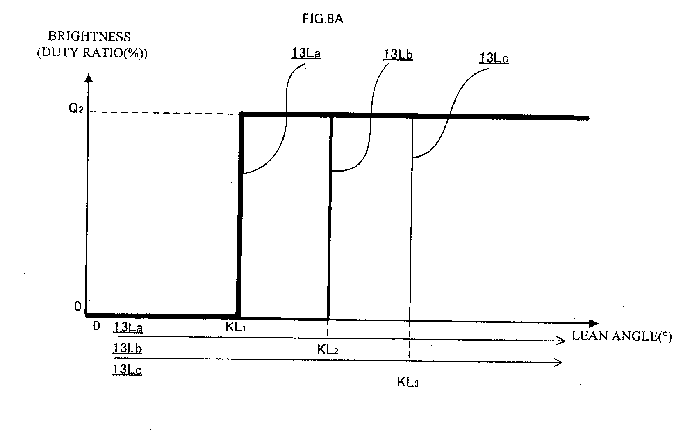

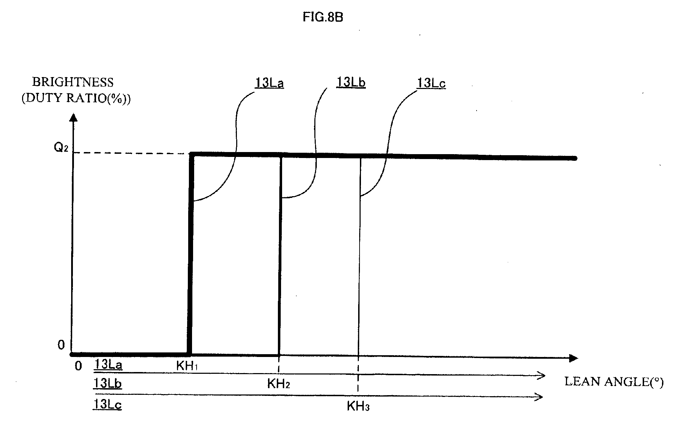

FIG. 8A is a diagram representing another example of the relationship between the brightnesses of the sub headlight light sources and the lean angle of the motorcycle while the low beam light source is on. FIG. 8B is a diagram representing another example of the relationship between the brightnesses of the sub headlight light sources and the lean angle of the motorcycle while the high beam light source is on.

In the examples represented in FIGS. 8A and 8B, only the low-beam reference values $KL_1$ to $KL_3$ and the high-beam reference values $KH_1$ to $KH_3$ are respectively set for the sub headlight light sources 13La to 13Lc.

While the low beam light source 11L is on, as shown in FIG. 8A, the sub headlight light sources 13La to 13Lc are off while the lean angle of the motorcycle 10 is below the low-beam reference values $KL_1$ to $KL_3$, and are on while the lean angle is at or above the low-beam reference values $KL_1$ to $KL_3$.

While the high beam light source 11H is on, as shown in FIG. 8B, the sub headlight light sources 13La to 13Lc are off while the lean angle of the motorcycle 10 is below the high-beam reference values $KH_1$ to $KH_3$, and are on while the lean angle is at or above the high-beam reference values $KH_1$ to $KH_3$.

In the embodiment represented in FIGS. 8A and 8B, it is possible to provide desirable illumination inside of a curve with the low-beam illumination and/or the high-beam illumination, while suppressing a size increase, as in the embodiment represented in FIG. 1 to FIG. 7C.

The foregoing embodiment described the case where three sub headlight light sources provide illumination on one side of the width direction of the vehicle. However, in the present teaching, the number of sub headlight light sources that provide illumination on one side of the width direction of the vehicle is not particularly limited, and only a single sub headlight light source, or more than one sub headlight light source may be provided to provide illumination one side of the width direction of the vehicle.

The foregoing example described the case where the same values are set for the respective tilt angles ($\theta_1$ to $\theta_3$) of the cutoff lines ($LL_1$ to $LL_3$) of the sub headlight light sources (13La to 13Lc) and for the low-beam reference values $KL_n$ respectively set for the sub headlight light sources (13La to 13Lc). However, the numerical values (angles) may be different. As used herein, "same numerical values" also means that the numerical values are essentially the same.

In the present embodiment, the sub headlight light sources 13La to 13Lc, 13Ra to 13Rc are LEDs, and the controller 20 controls (modulates) the brightness by adjusting the duty ratio by pulse width modulation (PWM). The method used to modulate the sub headlight light sources is not particularly limited, and, for example, the current or voltage sent to the sub headlight light sources may be controlled.

Further, a single sub headlight light source may be realized by a plurality of light sources of different brightnesses. In this case, these light sources may be switchably turned on to modulate the sub headlight light source. For example, when a single sub headlight light source includes three light sources of different brightnesses (for example, light sources that turn on at $Q_1$, $Q_2$, and $Q_3$; see FIGS. 4A and 4B), the brightnesses of the light sources can be controlled by switchably turning on the light sources.

It is also possible to realize a single sub headlight light source by a plurality of light sources. In this case, the sub headlight light source may be modulated by turning on the light sources in different numbers or in different combinations. The light sources may have the same or different brightnesses.

The motorcycle 10 of the present embodiment includes the sub-headlight units 13L and 13R disposed on each side of the width direction of the vehicle. However, the present teaching is not limited to this example. For example, a single sub-headlight unit may be realized as the integral unit of the sub-headlight units 13L and 13R disposed on each side of the width direction of the vehicle.

Further, in the present teaching, the sub-headlight unit may be a physically integral unit, or the sub headlight light sources in the sub-headlight unit may be physically separated.

Further, in the present embodiment, the sub-headlight units 13L and 13R are separately provided from the main headlight light source 11. However, the present teaching is not limited to this example, and the sub-headlight units may be integrally provided with the main head light source. In the present embodiment, the pair of left and right sub-headlight units 13L and 13R, the low beam light source 11L, and the high beam light source 11H form the headlight unit according to the present teaching.

The lean angle sensor 22 and the vehicle speed sensor 23 correspond to the detection unit that detects a variable used to find the lean angle of the motorcycle 10. In the present embodiment, the detection unit includes the lean angle sensor 22 and the vehicle speed sensor 23. However, the present teaching is not limited to this example, and, for example, the detection unit may include only the lean angle sensor 22, and not the vehicle speed sensor 23. The controller 20 corresponds to the control unit of the present teaching. However, the hardware configuration is not limited to this example in the present teaching. The control unit determines whether or not the lean angle of the motorcycle 10 has reached the reference value (low-beam reference value or high-beam reference value), using the variables detected by the detection unit. Here, the control unit is not necessarily required to calculate the lean angle, and the specific processing performed by the control unit is not particularly limited. For example, data of a table that correlates the angular velocity (roll rate) and vehicle speed to the result of whether or not the lean angle has reached the reference value may be stored in the memory of the controller 20 provided as the control unit. In this case, the control unit can refer to the table based on angular velocity and vehicle speed to determine whether or not the lean angle has reached the reference value, without calculating the lean angle.

In the present embodiment, the lean angle is the tilt angle of the vehicle leaning into a curve, relative to the upright state (vertical direction). However, the present teaching is not limited to this example, and the lean angle of the vehicle leaning into a curve may be a tilt angle relative to the direction perpendicular to the road surface. When the tilt angle of the vehicle leaning into a curve is relative to the direction perpendicular to the road surface, the tilt angle may be measured by using methods and devices known in the art.

Further, in the present embodiment, the sub-headlight unit is described as being separately provided from the control unit (controller 20) and the detection unit (lean angle sensor 22 and vehicle speed sensor 23). However, the present teaching is not limited to this example. The sub-headlight unit may include at least one of the control unit, a communication unit, and the detection unit.

The present embodiment has been described through the case where the sub headlight light source turns on according to lean angle. However, the sub headlight light source may be configured so that the function of lighting up according to lean angle is manually switched ON/OFF. Note here that even in this case the sub headlight light source turns on according to lean angle, not manually. On the other hand, the ON/OFF of the flashers are manually switched. This distinguishes the sub headlight light source from the flashers.

The sub headlight light source may be adapted to receive manually input ON/OFF instructions. In this case, the sub headlight light source turns on according to lean angle in the absence of the instructions, whereas, in the presence of the instructions, the sub headlight light source is turned on and off according to the instructions. Even in this case, the sub headlight light source still functions to turn on according to lean angle, and distinguishes itself from the flashers.

In the present teaching, "turning on" the sub headlight light source according to lean angle is not necessarily limited to directly bringing the sub headlight light source to the ON state from the OFF state according to lean angle, and may include gradually bringing the sub headlight light source to the ON state from the OFF state according to lean angle. Further, gradually bringing the sub headlight light source to the ON state from the OFF state according to lean angle includes both continuously bringing the sub headlight light source to the ON state from the OFF state, and bringing the sub headlight light source to the ON state from the OFF state in a stepwise fashion. Further, the ON state is not limited to the full ON state at the rated output, and may include the dim ON state in which the output is controlled below the output in the full ON state. Further, the output in the full ON state may exceed the rated output (for example, the light may be turned on at the maximum output). The output in the dim ON state exceeds the OFF-state output. Turning on the sub headlight light source according to lean angle may include turning on at a predetermined brightness brighter than in the OFF state according to lean angle. Specifically, "turning on" the sub headlight light source according to lean angle may include the following (i) to (iv), and is not limited to (i).

> (i) The sub headlight light source is directly or gradually brought to the full ON state from the OFF state according to lean angle.
> (ii) The sub headlight light source is directly or gradually brought to the dim ON state from the OFF state according to lean angle.
> (iii) The sub headlight light source is directly or gradually brought to the full ON state from the dim ON state according to lean angle.
> (iv) The sub headlight light source is directly or gradually brought to a second dim ON state from a first dim ON state according to lean angle. (The brightness is higher in the second dim ON state than in the first dim ON state.)

When the sub headlight light source is a light source (for example, an LED) that uses pulse width modulation for the brightness control, turning on the sub headlight light source according to lean angle may include continuously or gradually varying the duty ratio of the sub headlight light source from zero to higher values (above 0) according to lean angle.

The present embodiment has been described through the case where the sub headlight light source turns on according to lean angle. The sub headlight light source turns on according to lean angle, because the sub headlight light source mainly serves to provide light for the visibility of the operator of the vehicle. As such, the sub headlight light source is not necessarily required to turn on according to lean angle under bright conditions such as in daytime.

The embodiment discloses the following configurations.

(1) A sub-headlight unit for a vehicle that leans into turns,
the sub-headlight unit comprising:

a sub headlight light source that provides illumination forward and outward of the width direction of the vehicle on one side of the width direction of the vehicle,
wherein the sub headlight light source turns on when the lean angle of the vehicle leaning to the one side of the width direction of the vehicle reaches a low-beam reference value while a low beam light source of the vehicle is on, and
wherein the sub headlight light source turns on when the lean angle of the vehicle leaning to the one side of the width direction of the vehicle reaches a high-beam reference value smaller than the low-beam reference value while a high beam light source of the vehicle is on.

According to the configuration of (1), the sub headlight light source is separately provided from the low beam light source and the high beam light source provided as main headlights, and the sub headlight light source turns on according to lean angle.

The sub headlight light source provides illumination forward and outward of the width direction of the vehicle on one side of the vehicle, and has a different role from the high beam light source intended to provide illumination forward in front of the vehicle (the illumination directions of light are different). Thus, the respective light distributions of the sub headlight light source and the high beam light source can be suitably adjusted more in conformity with the intended roles of these light sources, and the light can be suppressed from illuminating unnecessary spaces. This makes it possible to suppress an increase in power consumption, and in the size of the engine, the battery, or the like.

Further, the sub headlight light source, separately provided from the low beam light source and the high beam light source, turns on according to the lean angle of the vehicle, and thus the on-time of the sub headlight light source is shorter than the on-times of the low beam light source and the high beam light source. This makes it possible to reduce the size of the heat radiation mechanism, and to suppress an increase in the size of the headlight installation space. Further, because the sub headlight light source is used while the low beam light source and/or the high beam light source are on, it is possible to limit the number of sub headlight light sources, and to suppress size increase.

Further, because the high-beam reference value is smaller than the low-beam reference value, the sub headlight light source can provide more distant illumination when the lean angle reaches the high-beam reference value than when the lean angle reaches the low-beam reference value. This makes it possible to make the illumination range of the sub headlight light source suitable for the high-beam illumination while also providing a suitable sub headlight light source illumination range for the low-beam illumination, without separately providing a sub headlight light source for use while the low beam light source is on, and a sub headlight light source for use while the high beam light source is on.

Thus, according to the configuration of (1), it is possible to desirably illuminate inside of a curve, regardless of whether the low beam light source or the high beam light source is on, while suppressing a size increase.

(2) The sub-headlight unit of (1),

wherein the sub headlight light source has a cutoff line below the horizontal line of the sub headlight light source upon the lean angle of the vehicle reaching the low-beam reference value, and
wherein the sub headlight light source has a cutoff line at least partially above the horizontal line of the sub headlight light source upon the lean angle of the vehicle reaching the high-beam reference value.

According to the configuration of (2), glare to other road users can be suppressed while the low beam light source is on, and distant illumination can be provided while the high beam light source is on. In this way, it is possible to more desirably illuminate inside of a curve while the low beam and/or the high beam are on.

(3) The sub-headlight unit of (1) or (2), wherein the angle created by the cutoff line and the horizontal line of the sub headlight light source is smaller when the lean angle of the vehicle is at the low-beam reference value than when the lean angle of the vehicle is at the high-beam reference value.

According to the configuration of (3), more distant illumination can be provided, and glare to other road users can be suppressed while the low beam light source is on. In this way, it is possible to desirably illuminate inside of a curve while the low beam is on, while providing desirable illumination inside of the curve while the high beam is on.

(4) The sub-headlight unit of any one of (1) to (3),

wherein the sub headlight light source is off in the upright state of the vehicle regardless of whether the low beam light source or the high beam light source is on.
According to the configuration of (4), the on-time of the sub headlight light source can be reduced while allowing the sub headlight light source to be turned on according to lean angle. In this way, it is possible to more effectively suppress an increase in power consumption, and thus a size increase of the heat radiation mechanism, the engine, the battery, or the like can be effectively suppressed.

(5) The sub-headlight unit according to any one of (1) to (4),

wherein the height difference between the center of a maximum illuminance portion of the illumination light from the sub headlight light source and the center of a maximum illuminance portion of the illumination light from the high beam light source is smaller when the lean angle of the vehicle is at the high-beam reference value than when the sub headlight light source is on in the upright state of the vehicle.
According to the configuration of (5), more distant and effective illumination can be provided, and the light can be suppressed from unnecessarily illuminating the space above the horizontal line while the high beam light source is on. In this way, it is possible to desirably illuminate inside of a curve while the high beam light source is on, while providing desirable illumination inside of the curve while the low beam light source is on.

(6) The sub-headlight unit according to any one of (1) to (5),

wherein the sub-headlight unit comprises a plurality of the sub headlight light sources,
the low-beam reference value and the high-beam reference value being set for each of the plurality of sub headlight light sources, and the low-beam reference value being different for the plurality of sub headlight light sources,
the plurality of sub headlight light sources being turned on in order from the sub headlight light sources having the smaller low-beam reference values as the lean angle to the one side of the vehicle increases while the low beam light source is on, and
the high-beam reference value of the sub headlight light source that turns on later being equal to or greater than the high-beam reference value of the sub headlight light source that turns on earlier in the turn-on sequence of the plurality of sub headlight light sources while the low beam light source is on.
According to the configuration of (6), the plurality of sub headlight light sources that turns on while the high beam light source is on turns on in the same sequence as the turn-on sequence of the plurality of sub headlight light sources that turns on while the low beam light source is on. Specifically, the sub headlight light source that turns on later (for example, the sub headlight light source that turns on second) in the plurality of sub headlight light sources while the low beam light source is on does not turn on before the sub headlight light source that turns on earlier (for example, the sub headlight light source that turns on first) in the plurality of sub headlight light sources while the high beam light source is on. In this way, the difference between the way the illumination ranges of the sub headlight light sources appear while the low beam light source is on and the way the illumination ranges of the sub headlight light sources appear while the high beam light source is on can be made smaller for the operator. This makes it possible to suppress the strangeness that might be felt by the operator in the illumination ranges of the sub headlight sources, and it is possible to more desirably illuminate inside of a curve, regardless of whether the low beam or the high beam is on.
(7) The sub-headlight unit of (6), wherein the sub headlight light sources having the larger low-beam reference values have illumination ranges positioned further upward of the vehicle in the upright state of the vehicle.

Because the sub headlight light source moves downward as the lean angle increases, the vertical moving range of the sub headlight light source from when the vehicle is in the upright state to when the lean angle of the vehicle reaches the low-beam reference value becomes larger for the sub headlight light sources having larger low-beam reference values.

However, according to the configuration of (7), the height difference that occurs in the on-illumination range of the sub headlight light source while the low beam light source is on can be reduced, because the illumination range of the sub headlight light sources is positioned further upward for the sub headlight light sources having larger low-beam reference values. Thus, the operator does not notice a large difference in the on-illumination range of each sub headlight light source.

Further, the high-beam reference value set for each sub headlight light source is smaller than the low-beam reference value set for the same sub headlight light source, and the high-beam reference value of the sub headlight light source that turns on later is equal to or greater than the high-beam reference value of the sub headlight light source that turns on earlier while the low beam light source is on. This also makes it possible to reduce the height difference that occurs in the on-illumination range of the sub headlight light source while the high beam light source is on. Thus, the operator does not notice a large difference in the on-illumination range of each sub headlight light source.

As a result, the illumination ranges of the sub headlight light sources do not appear much different to the operator, and the light can more desirably illuminate inside of a curve, regardless of whether the low beam or the high beam is on.

(8) The sub-headlight unit of (6) or (7),

wherein the sub headlight light source that turns on later with increasing lean angles of the vehicle has an illumination range of a predetermined illuminance whose outer edge is more outward relative to the width direction of the vehicle than the outer edge of the illumination range of a predetermined illuminance of the sub headlight light source that turns on earlier when the plurality of sub headlight light sources turns on with increasing lean angles of the vehicle, regardless of whether the low beam light source or the high beam light source is on.

The operator of a vehicle passing a curve tends to look at further inside of the curve as the lean angle of the vehicle increases.

According to the configuration of (8), the sub headlight light source that turns on later has an illumination range of a predetermined illuminance whose outer edge is more outward relative to the width direction of the vehicle than the outer edge of the illumination range of a predetermined illuminance of the sub headlight light source that turns on earlier, regardless of whether the low beam light source or the high beam light source is on. Thus, the light can more desirably illuminate the target view of the operator passing a curve, regardless of whether the low beam light source or the high beam light source is on.

(9) A headlight unit for a vehicle that leans into turns,

the headlight unit comprising the sub-headlight unit of any one of (1) to (8) in a pair, and the low beam light source and the high beam light source,
wherein one of the two sub-headlight units provides illumination forward and outward of the width direction of the vehicle on the left side of the vehicle, and the other sub-headlight unit provides illumination forward and outward of the width direction of the vehicle on the right side of the vehicle.

According to the configuration of (9), illumination can be desirably provided inside of a curve regardless of whether the low beam or the high beam is on, while suppressing a size increase.

(10) A headlight system for a vehicle that leans into turns,

the headlight system comprising:

the headlight unit of (9);
a detection unit that detects a variable used to find the lean angle of the vehicle; and
a control unit that turns on the sub headlight light source according to the lean angle of the vehicle found by using the result of the detection by the detection unit.

According to the configuration of (10), an AFS (Adaptive Front-Lighting System) can be realized that can desirably illuminate inside of a curve regardless of whether the low beam or the high beam is on, while suppressing a size increase.

(11) A vehicle that leans into turns, wherein the vehicle comprises the headlight system of (10).

According to the configuration of (11), illumination can be desirably provided inside of a curve regardless of whether the low beam or the high beam is on, while suppressing a size increase.

**Claims**

1. A sub-headlight unit for a vehicle that leans into turns by tilting inward on a curve,
   the sub-headlight unit (13L, 13R) comprising:

   at least one sub headlight light source (13La to 13Lc, 13Ra to 13Rc) that provides illumination light forward and outward of the width direction of the vehicle on one side of the width direction of the vehicle, and
   a control unit (20) adapted for controlling the sub headlight light source (13La to 13Lc, 13Ra to 13Rc) according to a lean angle of the vehicle,
   **characterized in that** the control unit (20) is adapted to turn on the sub headlight light source (13La to 13Lc, 13Ra to 13Rc) when the lean angle of the vehicle leaning to the one side of the width direction of the vehicle reaches a low-beam reference value while a low beam light source (11 L) of the vehicle is on, and
   the control unit (20) is adapted to turn on the sub headlight light source (13La to 13Lc, 13Ra to 13Rc) when the lean angle of the vehicle leaning to the one side of the width direction of the vehicle reaches a high-beam reference value smaller than the low-beam reference value while a high beam light source (11 H) of the vehicle is on.

2. A sub-headlight unit according to claim 1, **characterized in that** the sub headlight light source (13La to 13Lc, 13Ra to 13Rc) has a cutoff line below a horizontal line of the sub headlight light source (13La to 13Lc, 13Ra to 13Rc) upon the lean angle of the vehicle reaching the low-beam reference value, and
   wherein the sub headlight light source (13La to 13Lc, 13Ra to 13Rc) has a cutoff line at least partially above the horizontal line of the sub headlight light source (13La to 13Lc, 13Ra to 13Rc) upon the lean angle of the vehicle reaching the high-beam reference value.

3. A sub-headlight unit according to claim 1 or 2, **characterized in that** the angle created by a cutoff line and a horizontal line of the sub headlight light source (13La to 13Lc, 13Ra to 13Rc) is smaller when the lean angle of the vehicle is at the low-beam reference value than when the lean angle of the vehicle is at the high-beam reference value.

4. A sub-headlight unit according to any one of claims 1 to 3, **characterized in that** the control unit (20) is adapted to turn off the sub headlight light source (13La to 13Lc, 13Ra to 13Rc) in the upright state of the vehicle regardless of whether the low beam light source (11 L) or the high beam light source (11 H) is on.

5. A sub-headlight unit according to any one of claims 1 to 4, **characterized in that** a height difference between a center of a maximum illuminance portion of the illumination light from the sub headlight light source (13La to 13Lc, 13Ra to 13Rc) and a center of a maximum illuminance portion of the illumination light from the high beam light source (11 H) is smaller when the lean angle of the vehicle is at the high-beam reference value than when the sub headlight light source (13La to 13Lc, 13Ra to 13Rc) is on in the upright state of the vehicle.

6. A sub-headlight unit according to any one of claims 1 to 5, **characterized in that** the sub-headlight unit (13L, 13R) comprises a plurality of the sub headlight light sources (13La to 13Lc, 13Ra to 13Rc),
   the low-beam reference value and the high-beam reference value being set for each of the plurality of sub headlight light sources (13La to 13Lc, 13Ra to 13Rc), and the low-beam reference value being different for the plurality of sub headlight light sources (13La to 13Lc, 13Ra to 13Rc),
   the control unit (20) is adapted to turn on the plurality of sub headlight light sources (13La to 13Lc, 13Ra to 13Rc) in order from the sub headlight light sources (13La to 13Lc, 13Ra to 13Rc) having the smaller low-beam reference values as the lean angle to the one side of the vehicle increases while the low beam light source (11 L) is on, and
   the high-beam reference value of the sub headlight light source (13La to 13Lc, 13Ra to 13Rc) that turns on later being equal to or greater than the high-beam reference value of the sub headlight light source (13La to 13Lc, 13Ra to 13Rc) that turns on earlier in the turn-on sequence of the plurality of sub headlight light sources (13La to 13Lc, 13Ra to 13Rc) while the low beam light source (11 L) is on.

7. A sub-headlight unit according to claim 6, **characterized in that** the sub headlight light sources (13La to 13Lc, 13Ra to 13Rc) having the larger low-beam reference values have illumination ranges positioned further upward of the vehicle in the upright state of the vehicle.

8. A sub-headlight unit according to claim 6 or 7, **characterized in that** the sub headlight light source (13La to 13Lc, 13Ra to 13Rc) that turns on later with increasing lean angles of the vehicle has an illumination range of a predetermined illuminance whose outer edge is more outward relative to the width direction of the vehicle than the outer edge of the illumination range of a predetermined illuminance of the sub headlight light source (13La to 13Lc, 13Ra to 13Rc) that turns on earlier when the plurality of sub headlight light sources (13La to 13Lc, 13Ra to 13Rc) turns on with increasing lean angles of the vehicle, regardless of whether the low beam light source (11 L) or the high beam light source (11H) is on.

9. A headlight unit for a vehicle that leans into turns by tilting inward on a curve, the headlight unit comprising the sub-headlight unit (13L, 13R) of any one of claims 1 to 8 in a pair, and the low beam light source (11L) and the high beam light source (11 H),
wherein one (13L) of the two sub-headlight units provides illumination light forward and outward of the width direction of the vehicle on the left side of the vehicle, and the other (13R) sub-headlight unit provides illumination light forward and outward of the width direction of the vehicle on the right side of the vehicle.

10. A headlight system for a vehicle that leans into turns by tilting inward on a curve,
the headlight system comprising:

the headlight unit of claim 9;
a detection unit that detects a variable used to find the lean angle of the vehicle; and
the control unit (20) is adapted to turn on the sub headlight light source (13La to 13Lc, 13Ra to 13Rc) according to the lean angle of the vehicle found by using the result of the detection by the detection unit.

11. A vehicle that leans into turns by tilting inward on a curve, wherein the vehicle comprises the headlight system of claim 10.

12. A method for controlling sub-headlight unit for a vehicle that leans into turns by tilting inward on a curve comprising:

providing illumination light forward and outward of the width direction of the vehicle on one side of the width direction of the vehicle by at least one sub headlight light source (13La to 13Lc, 13Ra to 13Rc) according to a lean angle of the vehicle,
**characterized by**
turning on the sub headlight light source (13La to 13Lc, 13Ra to 13Rc) when the lean angle of the vehicle leaning to the one side of the width direction of the vehicle reaches a low-beam reference value while a low beam light source (11L) of the vehicle is on, and
turning on the sub headlight light source (13La to 13Lc, 13Ra to 13Rc) when the lean angle of the vehicle leaning to the one side of the width direction of the vehicle reaches a high-beam reference value smaller than the low-beam reference value while a high beam light source (11 H) of the vehicle is on.

13. A method for controlling sub-headlight unit according to claim 12, **characterized by**:

setting a cutoff line of the sub headlight light source (13La to 13Lc, 13Ra to 13Rc) below the horizontal line of the sub headlight light source (13La to 13Lc, 13Ra to 13Rc) upon the lean angle of the vehicle reaching the low-beam reference value,
setting a cutoff line of the sub headlight light source (13La to 13Lc, 13Ra to 13Rc) at least partially above the horizontal line of the sub headlight light source (13La to 13Lc, 13Ra to 13Rc) upon the lean angle of the vehicle reaching the high-beam reference value.

14. A method for controlling sub-headlight unit according to claim 12 or 13, **characterized in that** the angle created by a cutoff line and a horizontal line of the sub headlight light source (13La to 13Lc, 13Ra to 13Rc) is set smaller when the lean angle of the vehicle is at the low-beam reference value than when the lean angle of the vehicle is at the high-beam reference value.

15. A method for controlling sub-headlight unit according to any one of claims 12 to 14, **characterized by**:

turning off the sub headlight light source (13La to 13Lc, 13Ra to 13Rc) in the upright state of the vehicle regardless of whether the low beam light source (11 L) or the high beam light source (11 H) is on.

16. A method for controlling sub-headlight unit according to any one of claims 12 to 15, **characterized in that** a height difference between a center of a maximum illuminance portion of the illumination light from the sub headlight light source (13La to 13Lc, 13Ra to 13Rc) and a center of a maximum illuminance portion of the illumination light from the high beam light source (11H) is set smaller when the lean angle of the vehicle is at the high-beam reference value than when the sub headlight light source (13La to 13Lc, 13Ra to 13Rc) is on in the upright state of the vehicle.

17. A method for controlling sub-headlight unit according to any one of claims 12 to 16, **characterized in that** the sub-headlight unit comprises a plurality of the sub headlight light sources (13La to 13Lc, 13Ra to 13Rc), the method is further comprising:

setting the low-beam reference value and the high-beam reference value for each of the plurality of sub headlight light sources (13La to 13Lc, 13Ra to 13Rc), the low-beam reference value being different for the plurality of sub headlight light sources (13La to 13Lc, 13Ra to 13Rc),
turning on the plurality of sub headlight light sources (13La to 13Lc, 13Ra to 13Rc) in order from the sub headlight light sources (13La to 13Lc, 13Ra to 13Rc) having the smaller low-beam reference values as the lean angle to the one side of the vehicle increases while the low beam light source (11 L) is on, and
setting the high-beam reference value of the sub headlight light source (13La to 13Lc, 13Ra to 13Rc) that turns on later equal to or greater than the high-beam reference value of the sub headlight light source (13La to 13Lc, 13Ra to 13Rc) that turns on earlier in the turn-on sequence of the plurality of sub headlight light sources (13La to 13Lc, 13Ra to 13Rc) while the low beam light source (11 L) is on.

**Patentansprüche**

1. Eine Zusatz-Vorderlicht-Einheit für ein Fahrzeug, das sich durch Kippen nach innen in Kurven legt, die Zusatz-Vorderlicht-Einheit (13L, 13R) umfasst:

zumindest eine Zusatz-Vorderlicht-Lichtquelle (13La bis 13Lc, 13Ra bis 13Rc), die Ausleuchtungs-Licht nach vorne und außen in der Breiten-Richtung des Fahrzeugs an einer Seite in der Breiten-Richtung des Fahrzeugs bereitstellt, und
eine Steuereinheit (20), angepasst ist zur Steuerung der Zusatz-Vorderlicht-Lichtquelle (13La bis 13Lc, 13Ra bis 13Rc) gemäß einem Neigungswinkel des Fahrzeugs,
**dadurch gekennzeichnet, dass** die Steuereinheit (20) angepasst ist, die Zusatz-Vorderlicht-Lichtquelle (13La bis 13Lc, 13Ra bis 13Rc) anzuschalten, wenn der Neigungswinkel des Fahrzeugs, das sich zu der einen Seite in der Breiten-Richtung des Fahrzeugs neigt, einen Abblendlicht-Referenzwert erreicht, während eine Abblendlichtquelle (11L) des Fahrzeugs an ist, und
die Steuereinheit (20) angepasst ist, die Zusatz-Vorderlicht-Lichtquelle (13La bis 13Lc, 13Ra bis 13Rc) anzuschalten, wenn der Neigungswinkel des Fahrzeugs, das sich zu der einen Seite in der Breiten-Richtung des Fahrzeugs neigt, einen Aufblendlicht-Referenzwert, kleiner als der Abblendlicht-Referenzwert, erreicht, während eine Aufblendlichtquelle (11H) des Fahrzeugs an ist.

2. Eine Zusatz-Vorderlicht-Einheit gemäß Anspruch 1, **dadurch gekennzeichnet, dass** die Zusatz-Vorderlicht-Lichtquelle (13La bis 13Lc, 13Ra bis 13Rc) eine Abschirmungslinie, unterhalb einer horizontalen Linie der Zusatz-Vorderlicht-Lichtquelle (13La bis 13Lc, 13Ra bis 13Rc) hat, bei welcher der Neigungswinkel des Fahrzeugs den Abblendlicht-Referenzwert erreicht, und
wobei die Zusatz-Vorderlicht-Lichtquelle (13La bis 13Lc, 13Ra bis 13Rc) eine Abschirmungslinie zumindest teilweise über der horizontalen Linie der Zusatz-Vorderlicht-Lichtquelle (13La bis 13Lc, 13Ra bis 13Rc) hat, bei welcher der Neigungswinkel des Fahrzeugs den Aufblendlicht-Referenzwert erreicht.

3. Eine Zusatz-Vorderlicht-Einheit gemäß Anspruch 1 oder 2, **dadurch gekennzeichnet, dass** der Winkel, erzeugt durch eine Abschirmungslinie und einer horizontalen Linie der Zusatz-Vorderlicht-Lichtquelle (13La bis 13Lc, 13Ra bis 13Rc) kleiner ist, wenn der Neigungswinkel des Fahrzeugs an dem Abblendlicht-Referenzwert ist, als wenn der Neigungswinkel des Fahrzeug an dem Aufblendlicht-Referenzwert ist.

4. Eine Zusatz-Vorderlicht-Einheit gemäß irgendeinem der Ansprüche 1 bis 3, **dadurch gekennzeichnet, dass** die Steuereinheit(20) angepasst ist, die Zusatz-Vorderlicht-Lichtquelle (13La bis 13Lc, 13Ra bis 13Rc) in dem aufrechten Zustand des Fahrzeugs abzuschalten, ungeachtet, ob die Abblendlichtquelle (11 L) oder die Aufblendlichtquelle (11 H) an ist.

5. Eine Zusatz-Vorderlicht-Einheit gemäß irgendeinem der Ansprüche 1 bis 4, **dadurch gekennzeichnet, dass** eine Höhendifferenz zwischen einer Mitte eines maximalen Ausleuchteabschnitts des Ausleuchtungs-Lichts von der Zusatz-Vorderlicht-Lichtquelle (13La bis 13Lc, 13Ra bis 13Rc) und einer Mitte des maximalen Ausleuchteabschnitts des Ausleuchtungs-Lichts von der Aufblendlichtquelle 11 (H) kleiner ist, wenn der Neigungswinkel des Fahrzeugs an dem Aufblendlicht-Referenzwert ist, als wenn die Zusatz-Vorderlicht-Lichtquelle (13La bis 13Lc, 13Ra bis 13Rc) in dem im aufrechten Zustand des Fahrzeugs an ist.

6. Eine Zusatz-Vorderlicht-Einheit gemäß irgendeinem der Ansprüche 1 bis 5, **dadurch gekennzeichnet, dass** die Zusatz-Vorderlicht-Einheit (13L, 13R) eine Mehrzahl von den Zusatz-Vorderlicht-Lichtquellen (13La bis 13Lc, 13Ra bis 13Rc) umfasst,
der Abblendlicht-Referenzwert und der Aufblendlicht-Referenzwert für jede der Mehrzahl von Zusatz-Vorderlicht-Lichtquellen (13La bis 13Lc, 13Ra bis 13Rc) gesetzt ist, und der Abblendlicht-Referenzwert unterschiedlich für die Mehrzahl von Zusatz-Vorderlicht-Lichtquellen (13La bis 13Lc, 13Ra bis 13Rc) ist,
die Steuereinheit (20) angepasst ist, um die Mehrzahl von Zusatz-Vorderlicht-Lichtquellen (13La bis 13Lc, 13Ra bis 13Rc) anzuschalten, in der Reihenfolge von der Zusatz-Vorderlicht-Lichtquelle (13La bis 13Lc, 13Ra bis 13Rc), welche die geringeren Abblendlicht-Referenzwerte haben, wenn der Neigungswinkel zu der einen Seite des Fahrzeugs vergrößert, während die Abblendlichtquelle (11L) an ist, und
der Aufblendlicht-Referenzwert der Zusatz-Vorderlicht-Lichtquelle (13La bis 13Lc, 13Ra bis 13Rc), der später angeschaltet wird, ist gleich mit oder größer als der Aufblendlicht-Referenzwert für die Zusatz-Vorderlicht-Lichtquelle (13La bis 13Lc, 13Ra bis 13Rc), die früher in einer Anschaltsequenz der Mehrzahl von Zusatz-Vorderlicht-Lichtquellen (13La bis 13Lc, 13Ra bis 13Rc) angeschaltet wird, während die Abblendlichtquelle (11L) an ist.

7. Eine Zusatz-Vorderlicht-Einheit gemäß Anspruch 6, **dadurch gekennzeichnet, dass** die Zusatz-Vorderlicht-Lichtquellen (13La bis 13Lc, 13Ra bis 13Rc), die den größeren Abblendlicht-Referenzwert haben, Ausleuchtebereiche haben, die weiter oben von dem Fahrzeug in dem aufrechten Zustand des Fahrzeugs positioniert sind.

8. Eine Zusatz-Vorderlicht-Einheit gemäß Anspruch 6 oder 7, **dadurch gekennzeichnet, dass** die Zusatz-Vorderlicht-Lichtquelle (13La bis 13Lc, 13Ra bis 13Rc), später mit vergrößerten Neigungswinkeln des Fahrzeug angeschaltet ist, einen Ausleuchtebereich einer vorgegebenen Ausleuchtung hat, dessen äußere Kante weiter außen ist relativ zu der Breiten-Richtung des Fahrzeugs als die äußere Kante des Ausleuchtebereichs einer vorgegebenen Ausleuchtung der Zusatz-Vorderlicht-Lichtquelle (13La bis 13Lc, 13Ra bis 13Rc), die früher angeschaltet ist, wenn die Mehrzahl von Zusatz-Vorderlicht-Lichtquellen (13La bis 13Lc, 13Ra bis 13Rc) mit ansteigenden Neigungswinkeln des Fahrzeugs angeschaltet wird, ungeachtet, ob die Abblendlichtlichtquelle (11 L) oder die Aufblendlichtlichtquelle (11 H) an ist.

9. Eine Vorderlicht-Einheit für ein Fahrzeug, das sich durch Kippen nach innen in Kurven legt, die Vorderlicht-Einheit umfasst die Zusatz-Vorderlicht-Einheit (13L, 13R) von irgendeinem der Ansprüche 1 bis 8 in einem Paar, und die Abblendlichtquelle (11 L) und die Aufblendlichtquelle (11H),
wobei eine (13L) der zwei Zusatz-Vorderlicht-Einheiten Ausleuchtungs-Licht nach vorne und außen in der Breiten-Richtung des Fahrzeugs an der linken Seite des Fahrzeugs bereitstellt, und die andere (13R) Zusatz-Vorderlicht-Einheit Ausleuchtelicht nach vorne und außen in der Breiten-Richtung des Fahrzeugs an der rechten Seite des Fahrzeugs bereitstellt.

10. Ein Vorderlicht-System für ein Fahrzeug, das sich durch Kippen nach innen in Kurven legt, das Vorderlicht-System umfasst: eine Vorderlicht-Einheit von Anspruch 9;
eine Erfassungseinheit, die eine Variable erfasst, die verwendet ist, um den Neigungswinkel des Fahrzeuges zu finden; und
die Steuereinheit (20) ist angepasst, um die Zusatz-Vorderlicht-Lichtquelle (13La bis 13Lc, 13Ra bis 13Rc) gemäß dem Neigungswinkel des Fahrzeugs, gefunden durch Verwendung des Ergebnisses der Erfassung durch Erfassungseinheit anzuschalten.

11. Ein Fahrzeug, das sich durch Kippen nach innen in Kurven legt, wobei das Fahrzeug das Vorderlicht-System von Anspruch 10 umfasst.

12. Ein Verfahren zur Steuerung einer Zusatz-Vorderlicht-Einheit für ein Fahrzeug, das sich durch Kippen nach innen in Kurven legt, umfasst:

Bereitstellen von Ausleuchtungs-Licht nach vorne und außen in der Breiten-Richtung des Fahrzeugs an einer Seite der Breiten-Richtung des Fahrzeugs durch zumindest eine Zusatz-Vorderlicht-Lichtquelle (13La bis 13Lc, 13Ra bis 13Rc) gemäß eines Neigungswinkels des Fahrzeugs, **gekennzeichnet durch** Anschalten der Zusatz-Vorderlicht-Lichtquelle (13La bis 13Lc, 13Ra bis 13Rc), wenn der Neigungswinkel des Fahrzeugs, das sich zu der einen Seite in der Breiten-Richtung des Fahrzeugs neigt, einen Abblendlicht-Referenzwert erreicht, während eine Abblendlichtquelle (11L) des Fahrzeugs an ist, und Anschalten der Zusatz-Vorderlicht-Lichtquelle (13La bis 13Lc, 13Ra bis 13Rc), wenn der Neigungswinkel des Fahrzeugs, das sich zu der einen Seite in der Breiten-Richtung des Fahrzeugs neigt, einen Aufblendlicht-Referenzwert erreicht, der kleiner ist als der Abblendlicht-Referenzwert, während eine Aufblendlichtquelle (11 H) des Fahrzeugs an ist.

13. Ein Verfahren zur Steuerung einer Zusatz-Vorderlicht-Einheit gemäß Anspruch 12, **gekennzeichnet durch**:

Festlegen einer Abschirmungslinie der Zusatz-Vorderlicht-Lichtquelle (13La bis 13Lc, 13Ra bis 13Rc) unter die horizontale Linie der Zusatz-Vorderlicht-Lichtquelle (13La bis 13Lc, 13Ra bis 13Rc) bei welcher der Neigungswinkel des Fahrzeugs den Abblendlicht-Referenzwert erreicht, Festlegen einer Abschirmungslinie der Zusatz-Vorderlicht-Lichtquelle (13La bis 13Lc, 13Ra bis 13Rc) zumindest teilweise oberhalb der horizontalen Linie der Zusatz-Vorderlicht-Lichtquelle (13La bis 13Lc, 13Ra bis 13Rc) bei welcher der Neigungswinkel des Fahrzeugs den Aufblendlicht-Referenzwert erreicht.

14. Ein Verfahren zur Steuerung einer Zusatz-Vorderlicht-Einheit gemäß Anspruch 12 oder 13, **dadurch gekennzeichnet, dass** der Winkel, erzeugt durch eine Abschirmungslinie und einer horizontalen Linie der Zusatz-Vorderlicht-Lichtquelle (13La bis 13Lc, 13Ra bis 13Rc) kleiner ist, wenn der Neigungswinkel des Fahrzeugs an dem Abblendlicht-Referenzwert ist, als wenn der Neigungswinkel des Fahrzeug an dem Aufblendlicht-Referenzwert ist.

15. Ein Verfahren zur Steuerung einer Zusatz-Vorderlicht-Einheit gemäß irgendeinem der Ansprüche 12 bis 14, **gekennzeichnet durch**:

Abschalten der Zusatz-Vorderlicht-Lichtquelle (13La bis 13Lc, 13Ra bis 13Rc) in dem aufrechten Zustand des Fahrzeugs, ungeachtet, ob die Abblendlichtquelle (11L) oder die Aufblendlichtquelle (11 H) an ist.

16. Ein Verfahren zur Steuerung einer Zusatz-Vorderlicht-Einheit gemäß irgendeinem der Ansprüche 12 bis 15, **dadurch gekennzeichnet, dass** eine Höhendifferenz zwischen einer Mitte eines maximalen Ausleuchtabschnitts des Ausleuchtungs-Lichts von der Zusatz-Vorderlicht-Lichtquelle (13La bis 13Lc, 13Ra bis 13Rc) und einer Mitte des maximalen Ausleuchtabschnitts des Ausleuchtungs-Lichts von der Aufblendlichtquelle 11 (H) kleiner ist, wenn der Neigungswinkel des Fahrzeugs an dem Aufblendlicht-Referenzwert ist, als wenn die Zusatz-Vorderlicht-Lichtquelle (13La bis 13Lc, 13Ra bis 13Rc) in dem im aufrechten Zustand des Fahrzeugs an ist.

17. Ein Verfahren zur Steuerung einer Zusatz-Vorderlicht-Einheit gemäß irgendeinem der Ansprüche 12 bis 16, **dadurch gekennzeichnet, dass** die Zusatz-Vorderlicht-Einheit (13L, 13R) eine Mehrzahl von den Zusatz-Vorderlicht-Lichtquellen (13La bis 13Lc, 13Ra bis 13Rc) umfasst, das Verfahren umfasst weiterhin:

Festlegen des Abblendlicht-Referenzwertes und des Aufblendlicht-Referenzwertes für jede der Mehrzahl von Zusatz-Vorderlicht-Lichtquellen (13La bis 13Lc, 13Ra bis 13Rc), der Abblendlicht-Referenzwert ist unterschiedlich für die Mehrzahl von Zusatz-Vorderlicht-Lichtquellen (13La bis 13Lc, 13Ra bis 13Rc), Anschalten der Mehrzahl von Zusatz-Vorderlicht-Lichtquellen (13La bis 13Lc, 13Ra bis 13Rc), in der Reihenfolge von der Zusatz-Vorderlicht-Lichtquelle (13La bis 13Lc, 13Ra bis 13Rc), die einen geringeren Abblendlicht-Referenzwert haben, wenn der Neigungswinkel zu der einen Seite des Fahrzeugs vergrößert, während die Abblendlichtquelle (11L) an ist, und Festlegen des Aufblendlicht-Referenzwert der Zusatz-Vorderlicht-Lichtquelle (13La bis 13Lc, 13Ra bis 13Rc), der später angeschaltet wird, gleich mit oder größer als der Aufblendlicht-Referenzwert für die Zusatz-Vorderlicht-Lichtquelle (13La bis 13Lc, 13Ra bis 13Rc), die früher in einer Anschaltsequenz der Mehrzahl von Zusatz-Vorderlicht-Lichtquellen (13La bis 13Lc, 13Ra bis 13Rc) angeschaltet wird, während die Abblendlichtquelle (11 L) an ist.

**Revendications**

1. Unité de sous-phare pour un véhicule se penchant dans les virages en s'inclinant sur une courbe, l'unité de sous-phare (13L, 13R) comprenant :

   - au moins une source lumineuse de sous-phare (13La à 13Lc, 13Ra à 13Rc) fournissant une lumière d'éclairage vers l'avant et l'extérieur suivant la direction d'une largeur du véhicule sur un côté suivant la direction d'une largeur du véhicule ; et
   - une unité de commande (20) adaptée à commander la source lumineuse de sous-phare (13La à 13Lc, 13Ra à 13Rc) suivant un angle d'inclinaison du véhicule,
   - **caractérisée en ce que** l'unité de commande (20) est adaptée à allumer la source lumineuse de sous-phare (13La à 13Lc, 13Ra à 13Rc) lorsque l'angle d'inclinaison du véhicule se penchant vers le côté suivant la direction d'une largeur du véhicule atteint une valeur de référence de faisceau bas tandis qu'une source lumineuse de faisceau bas (11L) du véhicule est allumée ; et
   - l'unité de commande (20) est adaptée à allumer la source lumineuse de sous-phare (13La à 13Lc, 13Ra à 13Rc) lorsque l'angle d'inclinaison du véhicule se penchant vers le côté suivant la direction d'une largeur du véhicule atteint une valeur de référence de faisceau haut, plus petite que la valeur de référence de faisceau bas, tandis qu'une source lumineuse de faisceau haut (11H) du véhicule est allumée.

2. Unité de sous-phare selon la revendication 1, **caractérisée en ce que** la source lumineuse de sous-phare (13La à 13Lc, 13Ra à 13Rc) comporte une ligne de coupure au-dessous d'une ligne horizontale de la source lumineuse de sous-phare (13La à 13Lc, 13Ra à 13Rc) lorsque l'angle d'inclinaison du véhicule atteint la valeur de référence de faisceau bas, et

   - dans laquelle la source lumineuse de sous-phare (13La à 13Lc, 13Ra à 13Rc) comporte une ligne de coupure au moins partiellement au-dessus de la ligne horizontale de la source lumineuse de sous-phare (13La à 13Lc, 13Ra à 13Rc) lorsque l'angle d'inclinaison du véhicule atteint la valeur de référence de faisceau haut.

3. Unité de sous-phare selon les revendications 1 ou 2, **caractérisée en ce que** l'angle créé par une ligne de coupure et une ligne horizontale de la source lumineuse de sous-phare (13La à 13Lc, 13Ra à 13Rc) est plus petit lorsque l'angle d'inclinaison du véhicule est à la valeur de référence de faisceau bas lorsque l'angle d'inclinaison du véhicule est à la valeur de référence de faisceau haut.

4. Unité de sous-phare selon l'une quelconque des revendications 1 à 3, **caractérisée en ce que** l'unité de commande (20) est adaptée à éteindre la source lumineuse de sous-phare (13La à 13Lc, 13Ra à 13Rc) à l'état droit du véhicule indépendamment du fait que la source lumineuse de faisceau bas (11L) ou la source lumineuse de faisceau haut (11H) soit allumée ou non.

5. Unité de sous-phare selon l'une quelconque des revendications 1 à 4, **caractérisée en ce qu'**une différence de hauteur entre un centre d'une partie de luminance maximale de la lumière d'éclairage de la source lumineuse de sous-phare (13La à 13Lc, 13Ra à 13Rc) et un centre d'une partie de luminance maximale de la lumière d'éclairage de la source lumineuse de faisceau haut (11H) est plus petite lorsque l'angle d'inclinaison du véhicule est à la valeur de référence de faisceau haut que lorsque la source lumineuse de sous-phare (13La à 13Lc, 13Ra à 13Rc) est allumée à l'état droit du véhicule.

6. Unité de sous-phare selon la revendication 1, **caractérisée en ce que** l'unité de sous-phare (13L, 13R) comprend une pluralité de sources lumineuses de sous-phare (13La à 13Lc, 13Ra à 13Rc) ;

   - la valeur de référence de faisceau bas et la valeur de référence de faisceau haut étant fixées pour chaque source de la pluralité de sources lumineuses de sous-phare (13La à 13Lc, 13Ra à 13Rc) et la valeur de référence de faisceau bas étant différente pour la pluralité de sources lumineuses de sous-phare (13La à 13Lc, 13Ra à 13Rc) ;
   - l'unité de commande (20) est adaptée à allumer la pluralité de sources lumineuses de sous-phare (13La à 13Lc, 13Ra à 13Rc) dans un ordre à partir des sources lumineuses de sous-phare (13La à 13Lc, 13Ra à 13Rc) ayant les valeurs de référence de faisceau bas plus petites à mesure qu'augmente l'angle d'inclinaison vers le côté du véhicule tandis que la source lumineuse de faisceau bas (11L) est allumée ; et
   - la valeur de référence de faisceau haut de la source lumineuse de sous-phare (13La à 13Lc, 13Ra à 13Rc) s'allumant plus tard étant supérieure ou égale à la valeur de référence de faisceau haut de la source lumineuse de sous-phare (13La à 13Lc, 13Ra à 13Rc) s'allumant plus tôt dans la séquence d'allumage de la pluralité de sources lumineuses de sous-phare (13La à 13Lc, 13Ra à 13Rc) tandis que la source lumineuse de faisceau bas (11L) est allumée.

7. Unité de sous-phare selon la revendication 6, **caractérisée en ce que** les sources lumineuses de sous-phare (13La à 13Lc, 13Ra à 13Rc) ayant les valeurs de référence de faisceau bas plus grandes ont des portées d'éclairage positionnées davantage vers le haut du véhicule à l'état droit du véhicule.

8. Unité de sous-phare selon les revendications 6 ou 7, **caractérisée en ce que** la source lumineuse de sous-phare (13La à 13Lc, 13Ra à 13Rc) s'allumant plus tard à mesure qu'augmentent les angles d'inclinaison du véhicule a une portée d'éclairage d'une luminance prédéterminée dont le bord extérieur est davantage vers l'extérieur relativement à la direction d'une largeur du véhicule que le bord extérieur de la portée d'éclairage d'une luminance prédéterminée de la source lumineuse de sous-phare (13La à 13Lc, 13Ra à 13Rc) s'allumant plus tôt lorsque la pluralité de sources lumineuses de sous-phare (13La à 13Lc, 13Ra à 13Rc) s'allume à mesure qu'augmentent les angles d'inclinaison du véhicule, indépendamment du fait que la source lumineuse de faisceau bas (11L) ou la source lumineuse de faisceau haut (11H) soit allumée ou non.

9. Unité de phare pour un véhicule se penchant dans les virages en s'inclinant sur une courbe, l'unité de phare comprenant l'unité de sous-phare (13L, 13R) selon l'une quelconque des revendications 1 à 8 en une paire et la source lumineuse de faisceau bas (11L) et la source lumineuse de faisceau haut (11H),

    - dans laquelle une (13L) des deux unités de sous-phare fournit une lumière d'éclairage vers l'avant et l'extérieur suivant la direction d'une largeur du véhicule sur le côté gauche du véhicule et l'autre (13R) unité de sous-phare fournit une lumière d'éclairage vers l'avant et l'extérieur suivant la direction d'une largeur du véhicule sur le côté droit du véhicule.

10. Système de phare pour un véhicule se penchant dans les virages en s'inclinant sur une courbe, le système de phare comprenant :

    - l'unité de phare selon la revendication 9 ;
    - une unité de détection détectant une variable utilisée pour trouver l'angle d'inclinaison du véhicule ; et
    - l'unité de commande (20) est adaptée à allumer la source lumineuse de sous-phare (13La à 13Lc, 13Ra à 13Rc) suivant l'angle d'inclinaison du véhicule trouvé en utilisant le résultat de la détection par l'unité de détection.

11. Véhicule se penchant dans les virages en s'inclinant sur une courbe, dans lequel le véhicule comprend le système de phare selon la revendication 10.

12. Procédé de commande d'une unité de sous-phare pour un véhicule se penchant dans les virages en s'inclinant sur une courbe, consistant à :

    - fournir une lumière d'éclairage vers l'avant et l'extérieur suivant la direction d'une largeur du véhicule sur un côté suivant la direction d'une largeur du véhicule par au moins une source lumineuse de sous-phare (13La à 13Lc, 13Ra à 13Rc) suivant un angle d'inclinaison du véhicule,
    - **caractérisé par** les étapes consistant à :
    - allumer la source lumineuse de sous-phare (13La à 13Lc, 13Ra à 13Rc) lorsque l'angle d'inclinaison du véhicule se penchant vers le côté suivant la direction d'une largeur du véhicule atteint une valeur de référence de faisceau bas tandis qu'une source lumineuse de faisceau bas (11L) du véhicule est allumée ; et
    - allumer la source lumineuse de sous-phare (13La à 13Lc, 13Ra à 13Rc) lorsque l'angle d'inclinaison du véhicule se penchant vers le côté suivant la direction d'une largeur du véhicule atteint une valeur de référence de faisceau haut, plus petite que la valeur de référence de faisceau bas, tandis qu'une source lumineuse de faisceau haut (11H) du véhicule est allumée.

13. Procédé de commande d'une unité de sous-phare selon la revendication 12, **caractérisé par** les étapes consistant à :

    - fixer une ligne de coupure de la source lumineuse de sous-phare (13La à 13Lc, 13Ra à 13Rc) au-dessous de la ligne horizontale de la source lumineuse de sous-phare (13La à 13Lc, 13Ra à 13Rc) lorsque l'angle d'inclinaison du véhicule atteint la valeur de référence de faisceau bas ;
    - fixer une ligne de coupure de la source lumineuse de sous-phare (13La à 13Lc, 13Ra à 13Rc) au moins partiellement au-dessus de la ligne horizontale de la source lumineuse de sous-phare (13La à 13Lc, 13Ra à 13Rc) lorsque l'angle d'inclinaison du véhicule atteint la valeur de référence de faisceau haut.

14. Procédé de commande d'une unité de sous-phare selon les revendications 12 ou 13, **caractérisé en ce que** l'angle formé par une ligne de coupure et une ligne horizontale de la source lumineuse de sous-phare (13La à 13Lc, 13Ra à 13Rc) est fixé pour être plus petit lorsque l'angle d'inclinaison du véhicule est à la valeur de référence de faisceau haut.

15. Procédé de commande d'une unité de sous-phare selon l'une quelconque des revendications 12 à 14, **caractérisé par** l'étape consistant à :

- éteindre la source lumineuse de sous-phare (13La à 13Lc, 13Ra à 13Rc) à l'état droit du véhicule indépendamment du fait que la source lumineuse de faisceau bas (11L) ou la source lumineuse de faisceau haut (11H) soit allumée ou non.

16. Procédé de commande d'une unité de sous-phare selon l'une quelconque des revendications 12 à 15, caractérisé en ce **qu'**une différence de hauteur entre un centre d'une partie de luminance maximale de la lumière d'éclairage de la source lumineuse de sous-phare (13La à 13Lc, 13Ra à 13Rc) et un centre d'une partie de luminance maximale de la lumière d'éclairage de la source lumineuse de faisceau haut (11H) est fixée plus petite lorsque l'angle d'inclinaison du véhicule est à la valeur de référence de faisceau haut que lorsque la source lumineuse de sous-phare (13La à 13Lc, 13Ra à 13Rc) est allumée à l'état droit du véhicule.

17. Procédé de commande d'une unité de sous-phare selon l'une quelconque des revendications 12 à 16, **caractérisé en ce que** l'unité de sous-phare comprend une pluralité de sources lumineuses de sous-phare (13La à 13Lc, 13Ra à 13Rc), le procédé comprenant en outre les étapes consistant à :

- fixer la valeur de référence de faisceau bas et la valeur de référence de faisceau haut pour chaque source de la pluralité de sources lumineuses de sous-phare (13La à 13Lc, 13Ra à 13Rc), la valeur de référence de faisceau bas étant différente pour la pluralité de sources lumineuses de sous-phare (13La à 13Lc, 13Ra à 13Rc) ;
- allumer la pluralité de sources lumineuses de sous-phare (13La à 13Lc, 13Ra à 13Rc) dans un ordre à partir des sources lumineuses de sous-phare (13La à 13Lc, 13Ra à 13Rc) ayant les valeurs de référence de faisceau bas plus petites à mesure qu'augmente l'angle d'inclinaison vers le côté du véhicule tandis que la source lumineuse de faisceau bas (11L) est allumée ; et
- fixer la valeur de référence de faisceau haut de la source lumineuse de sous-phare (13La à 13Lc, 13Ra à 13Rc) s'allumant plus tard pour qu'elle soit supérieure ou égale à la valeur de référence de faisceau haut de la source lumineuse de sous-phare (13La à 13Lc, 13Ra à 13Rc) s'allumant plus tôt dans la séquence d'allumage de la pluralité de sources lumineuses de sous-phare (13La à 13Lc, 13Ra à 13Rc) tandis que la source lumineuse de faisceau bas (11L) est allumée.

FIG.1

10

15

12

18

13Rc
13R
13Rb
13Ra

13Lc
13Lb
13L
13La

14R

14L

17

11

FIG.2

FIG.3

FIG.3 block diagram showing vehicle headlight control system (10, 20).

Components: BEAM SWITCH, FLASHER SWITCH (15, 15B, 15F), POWER SUPPLY (26), LEAN ANGLE SENSOR (22), VEHICLE SPEED SENSOR (23), CONTROLLER (21), ANSWERBACK MAIN BODY UNIT (COMMUNICATION UNIT, CONTROL UNIT), REMOTE CONTROL KEY (25).

MAIN HEADLIGHT (11): HIGH BEAM LIGHT SOURCE (11H), LOW BEAM LIGHT SOURCE (11L).

LEFT FLASHER (14L), RIGHT FLASHER (14R).

SUB HEADLIGHT LIGHT SOURCE (13La, 13Lb, 13Lc = 13L; 13Ra, 13Rb, 13Rc = 13R; 13).

EP 2 676 872 B1

FIG.4A

BRIGHTNESS
(DUTY RATIO(%))

FIG.4B

FIG.5

FIG.6A

FIG.6B

FIG.6C

FIG.7A

FIG.7B

FIG.7C

FIG.8A

FIG.8B

**EP 2 676 872 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010168958 A1
- JP 2008222178 A